# EUROPEAN PATENT APPLICATION

(11) **EP 3 206 273 A1**
(43) Date of publication of application: **16.08.2017**
(21) Application number: 15848696.9
(22) Date of filing: 17.07.2015
(51) Int. Cl.: H02J 3/14, G06Q 50/06, H02J 3/00

(54) **INDUSTRIAL DEMAND RESPONSE ENABLING SYSTEM, INDUSTRIAL DEMAND RESPONSE ENABLING METHOD, AND PROGRAM**

(30) Priority: 09.10.2014 JP 2014208205
(71) Applicant: Yokogawa Electric Corporation, Tokyo 180-8750 (JP)
(72) Inventor: SEKI Akira, Musashino-shi Tokyo 180-8750 (JP); MARUMO Teruaki, Musashino-shi Tokyo 180-8750 (JP); INOUE Ken-ichi, Musashino-shi Tokyo 180-8750 (JP); MARUYAMA Takao, Musashino-shi Tokyo 180-8750 (JP); FUKUMINE Hiroshi, Musashino-shi Tokyo 180-8750 (JP); TERADA Masahiro, Musashino-shi Tokyo 180-8750 (JP); ENDO Akira, Musashino-shi Tokyo 180-8750 (JP)
(74) Representative: Henkel, Breuer & Partner
(86) International application number: PCT/JP2015/070603
(87) International publication number: WO 2016/056287

(57) **Abstract**

An industrial demand response enabling system according to an aspect of the present invention includes a first determination device configured to specify a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility and calculate a first reducible amount of the electric power reducible by the first facility and a second reducible amount of the electric power reducible by the second facility. The first determination device determines, on the basis of the first and second reducible amounts, whether it is possible to reduce the electric power corresponding to a reduction amount designated by a reduction request from an electricity provider and issues an instruction to change an operating state of at least one of the first and second facilities which are necessary for meeting the designated reduction amount when the first determination device determines that it is possible to reduce the electric power corresponding to the designated reduction amount.

## Description

### Technical Field

The present invention relates to an industrial demand response enabling system, an industrial demand response enabling method, and a program for enabling an industrial demand response that responds to an electric power consumption reduction request in a company having an industrial installation.

Priority is claimed on Japanese Patent Application No. 2014-208205, filed October 9, 2014, the content of which is incorporated herein by reference.

### Background Art

If there is an urgent situation with regard to electric power, electricity providers such as electric power companies sometimes request (demand) that consumers who use electric power temporarily cut back on the use of electric power. A demand-response (DR) business model seeking to provide a stable supply of electric power has appeared directed at homes and buildings in which such a demand for a cutback of electric power from an electricity provider and the response to the request from a consumer are formalized, and an electricity provider pays a price (incentive) to consumers that have cut back on electric power (for example, a temporary power savings measure).

Conventionally, there have been energy management systems for consumers, such as the HEMS (home energy management system) directed at managing private dwellings and the BEMS (building energy management system) directed at managing commercial buildings. Efforts have been underway to have these energy management systems accommodate demand-response.

For example, the art disclosed in Patent Document 1 estimates the operation of a device used by a consumer, taking into consideration the environment in which the consumer is placed and, by simulating the energy consumption of the device, calculates the effect if demand-response is done.

For example, the art disclosed in Patent Document 2, directed at social infrastructure that includes humans, is art of a control information system that performs control that includes demand-response. With the art disclosed in Patent Document 2, demand-response is done in a smart city that manages energy in the overall city, treating a small- to mid-sized group of consumers within a community collectively, including control of social infrastructure such as a transport network and lifelines. According to the art disclosed in Patent Document 2, the quality of life (QOL) of residents (consumers) is maintained and improved, and the overall city is optimized.

A company having an industrial installation such as plants, and especially, a company having large-scale plants is generally also a large consumer of electric power. In the plant, there are industrial production facilities that are large-power facilities using electric power supplied directly from an electricity provider, and there are cases in which, if there is no adverse effect on production in the plant, the running (operation) of the production facilities can be stopped or the production capacity can be reduced. Some plants provide alternative means for in-house electrical generation in the event of a stoppage of the supply of electric power. For that reason, it can be said that a company having industrial installations such as plants represent a large latent capability of applying industry demand-response (iDR).

In a plant, it is necessary to assure quality, price, and delivery of products and work-in-progress made by the production facilities, and also necessary to assure safety and security. For example, if dangerous materials or substances are processed or produced in a plant, the stoppage or adjustment of the capacity of the production facilities might involve danger. For example, because a plurality of production facilities disposed in a plant are linked, if only a part of the production facilities is stopped or has a reduction in production capacity, there might be cases in which the overall production balance is destroyed and loss occurs. Although a company having an industrial installation may receive an order from a customer to produce products in a plant, it may be difficult to produce the ordered products by a designated delivery date when responding to an industrial demand response, and it may be necessary to change a product production plan according to a request of the demand response. For that reason, accommodating industry demand-response in a company having an industrial installation such as plants, that is, power savings in the company having the industrial installation, have been conventionally limited, for example, to partial power savings, such as turning off a part of the lighting devices, or stopping a part of the air-conditioning equipment, and it has not been possible to accommodate the part that influences the production of products. That is, the accommodation of a company having an industrial installation to industry demand-response had not progressed to the point of handling optimization of the overall installation in the company.

A company having an industrial installation may be divided into a sales order section and a plant. The sales order section receives orders from customers and gives instructions on the quantity and the delivery of products to be produced to the plant, and orders necessary raw materials and services. The plant drafts a production plan for producing products to actually produce and manage products. Alternatively, products may be produced by cooperation of a plurality of plants located at different places rather than by a single plant. Moreover, these plants may make a contract with the same electricity provider and may make a contract with different electricity providers. Furthermore, a plant may be divided into a production section that produces products and an energy supply section that manages the supply of energy to be used in the plant. The energy supply section always performs an operation of managing the supply of energy with sufficient reserve energy without any influence on production of products in a plant. That is, the reserve energy may be wasted energy, and the amount of wasted energy may increase if a large amount of reserve energy is secured. This is because it is difficult to accurately predict an energy consumption amount required for production.

### Citation List

### Patent Document

[Patent Document 1] Japanese Patent No. 4995958
[Patent Document 2] Japanese Unexamined Patent Application, First Publication No. 2013-069084

### Summary of Invention

### Technical Problem

An aspect of the present invention provides an industrial demand response enabling system, an industrial demand response enabling method, and a program capable of allowing a company having an industrial installation to determine whether electric power reduction requested by an industrial demand response can be enabled while reducing an influence on production of ordered products.

### Solution to Problem

An industrial demand response enabling system according to an aspect of the present invention may include: a first determination device configured to specify a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility and calculate a first reducible amount of the electric power reducible by the first facility and a second reducible amount of the electric power reducible by the second facility. The first determination device may determine, on the basis of the first and second reducible amounts, whether it is possible to reduce the electric power corresponding to a reduction amount designated by a reduction request from an electricity provider and issue an instruction to change an operating state of at least one of the first and second facilities which are necessary for meeting the designated reduction amount when the first determination device determines that it is possible to reduce the electric power corresponding to the designated reduction amount.

In the industrial demand response enabling system, the first determination device may output information indicating a determination result of whether it is possible to reduce the electric power corresponding to the reduction amount designated by the reduction request from the electricity provider.

In the industrial demand response enabling system, the first determination device may specify the second facility and a third facility capable of reducing the electric power used by the facility by rearranging processes among the respective facilities on the basis of a production plan for operating the respective facilities installed in the industrial installation to produce products and a utilization plan of the respective facilities based on the production plan and periodically update a demand response capacity list table in which the first reducible amount, the second reducible amount, and a third reducible amount of the electric power reducible by the third facility are summarized.

In the industrial demand response enabling system, the first determination device may determine whether the first reducible amount meets the designated reduction amount and issue an instruction to change the operating state of the first facility when the first reducible amount meets the reduction amount, and the first determination device may determine whether a reducible amount obtained by summing the first reducible amount and the second reducible amount meets the reduction amount when the first reducible amount does not meet the reduction amount and issue an instruction to change the operating state of the first and second facilities when the reducible amount obtained by summing the first reducible amount and the second reducible amount meets the reduction amount.

In the industrial demand response enabling system, the first determination device may determine whether a reducible amount obtained by adding the first reducible amount and the third reducible amount meets the reduction amount when the reducible amount obtained by summing the first reducible amount and the second reducible amount does not meet the reduction amount, issue an instruction to draft a new production plan when the reducible amount obtained by adding the first reducible amount and the third reducible amount meets the reduction amount, and issue an instruction to change the current production plan to the new production plan when the new production plan drafted according to the instruction to draft the new production plan is an implementable production plan.

In the industrial demand response enabling system, the first determination device may determine whether the second facility can reduce the electric power at a designated time at which reduction of the electric power corresponding to the designated reduction amount starts when the designated time is later than a feasible time at which the first facility and the second facility can start reducing the electric power and is earlier than a production plan drafting time at which a new production plan is required to be drafted and issue an instruction to change the operating state of the first facility when the second facility cannot reduce the electric power, and the determination device may issue an instruction to change the operating states of the first and second facilities when the second facility can reduce the electric power.

In the industrial demand response enabling system, the first determination device may issue an instruction to draft the new production plan when the designated time is later than the production plan drafting time required for drafting the new production plan and issue an instruction to change the current production plan to the new production plan when the new production plan drafted according to the instruction to draft the new production plan is an implementable production plan.

In the industrial demand response enabling system, when changing the operating state of the second facility is instructed, the first determination device may exclude the second facility from being a target for which changing the operating state is instructed to prevent an instruct of a further change in the operating state of the second facility.

In the industrial demand response enabling system, the first determination device may display information on the first reducible amount and information on the second reducible amount to be visualized in a time-axis direction.

The industrial demand response enabling system may further include a second determination device configured to calculate a gain/loss obtained by changing the production plan for operating the respective facilities installed in the industrial installation to produce products to an amended production plan which is a new production plan and determine whether the production plan is to be changed to the amended production plan. The first determination device may determine that the electric power corresponding to the designated reduction amount can be reduced when the second determination device determines that the production plan is to be changed.

In the industrial demand response enabling system, the second determination device may include: a production energy consumption predictor configured to predict a consumption amount of the electric power used by the respective facilities operated in the production plan on the basis of an energy consumption characteristics table in which a plurality of processes used when the respective facilities installed in the industrial installation produce products, a time period required for each of the plurality of processes, a process to be performed subsequently to each process, and a consumption amount of energy consumed by each of the plurality of processes are summarized for each of the processes and output the predicted consumption amount of the electric power, and the production energy consumption predictor may output the consumption amount of the electric power with respect to each of the current production plan and the amended production plan.

In the industrial demand response enabling system, the second determination device may further include: a first gain/loss calculator configured to calculate, as a first gain/loss, a gain/loss obtained when the current production plan is changed to the amended production plan on the basis of the consumption amounts of the electric power of the current production plan and the amended production plan, information on a unit price in each time period of the electric power included in the reduction request, information on an incentive when the electric power is reduced according to the reduction request, and information on a penalty fee awarded when the electric power according to the reduction request cannot be reduced; and a second gain/loss calculator configured to calculate, as a second gain/loss, a gain/loss obtained when the current production plan is changed to the amended production plan on the basis of the current production plan, the amended production plan, and limitations of the industrial installation.

In the industrial demand response enabling system, the second determination device may determine that the amended production plan can be implemented when a third gain/loss obtained by adding the first and second gains/losses exceeds a predetermined threshold for determining whether the third gain/loss corresponds to a demand response, and when the third gain/loss is equal to or smaller than the predetermined threshold, the second determination device may determine that the amended production plan cannot be implemented and output information on a determination result.

In the industrial demand response enabling system, the second determination device may further include: a gain/loss corrector configured to specify a risk occurring when the current production plan is changed to the amended production plan on the basis of a risk list table in which items of information on a risk occurring when operations of the respective facilities installed in the industrial installation are changed are listed and output a fourth gain/loss obtained by correcting the third gain/loss using a gain/loss generated due to the specified risk. The second determination device may determine that the amended production plan can be implemented when the fourth gain/loss exceeds the threshold and determine that the amended production plan cannot be implemented when the fourth gain/loss is equal to or smaller than the threshold.

In the industrial demand response enabling system, the second determination device may display information on the calculated gain/loss in a visualized manner, and the second determination device may determine that the amended production plan can be implemented when an instruction to implement the amended production plan is input.

An industrial demand response enabling method according to another aspect of the present invention may include: specifying a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility; calculating a first reducible amount of the electric power reducible by the first facility and a second reducible amount of the electric power reducible by the second facility; determining, on the basis of the first and second reducible amounts, whether it is possible to reduce the electric power corresponding to a reduction amount designated by a reduction request from an electricity provider; and issuing an instruction to change an operating state of at least one of the first and second facilities which are necessary for meeting the designated reduction amount when it is determined that it is possible to reduce the electric power corresponding to the designated reduction amount.

The industrial demand response enabling method may further include outputting a determination result on whether it is possible to reduce the electric power corresponding to the reduction amount designated by the reduction request from the electricity provider.

The industrial demand response enabling method may further include calculating a gain/loss obtained by changing a production plan for operating the respective facilities installed in the industrial installation to produce products and determining whether the production plan is to be changed; and determining that the electric power corresponding to the designated reduction amount can be reduced when the second determination device determines that the production plan is to be changed.

A non-transitory computer-readable storage medium according to another aspect of the present invention may store a program to be executed by a computer. The program may include: a code for specifying a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility; a code for calculating a first reducible amount of the electric power reducible by the first facility and a second reducible amount of the electric power reducible by the second facility; a code for determining, on the basis of the first and second reducible amounts, whether it is possible to reduce the electric power corresponding to a reduction amount designated by a reduction request from an electricity provider; and a code for issuing an instruction to change an operating state of at least one of the first and second facilities which are necessary for meeting the designated reduction amount when it is determined that it is possible to reduce the electric power corresponding to the designated reduction amount.

In the storage medium, the program may further include a code for outputting information indicating a determination result on whether it is possible to reduce the electric power corresponding to the reduction amount designated by the reduction request from the electricity provider.

In the storage medium, the program may further include a code for calculating a gain/loss obtained by changing a production plan for operating the respective facilities installed in the industrial installation to produce products and determining whether the production plan is to be changed; and a code for determining that the electric power corresponding to the designated reduction amount can be reduced when the second determination device determines that the production plan is to be changed. Advantageous Effects of Invention

According to an aspect of the present invention, it is possible to obtain an advantage that a company having an industrial installation can determine whether electric power reduction requested by an industrial demand response can be enabled while reducing an influence on production of ordered products.

### Brief Description of Drawings

FIG. 1 is a diagram illustrating a schematic configuration of an entire system constructed in a facility which is operated using an industrial demand response enabling system according to an embodiment of the present invention.
FIG. 2 is a diagram illustrating an example of a configuration of a facility in an industrial installation which is operated using an industrial demand response enabling system according to the present embodiment.
FIG. 3 is a diagram illustrating an example of a demand response capacity list table of respective facilities installed in an industrial installation which is operated using the industrial demand response enabling system according to the present embodiment.
FIG. 4 is a diagram illustrating an example of an energy consumption characteristics table of facilities installed in an industrial installation which is operated using the industrial demand response enabling system according to the present embodiment.
FIG. 5 is a flowchart illustrating a first processing procedure of the industrial demand response enabling system according to the present embodiment.
FIG. 6 is a flowchart illustrating a second processing procedure of the industrial demand response enabling system according to the present embodiment.
FIG. 7A is a diagram illustrating an example of a production plan of which enableability is determined by the industrial demand response enabling system according to the present embodiment.
FIG. 7B is a diagram illustrating an example of a production plan of which enableability is determined by the industrial demand response enabling system according to the present embodiment.
FIG. 8A is a diagram illustrating an example of changing a production plan in the industrial demand response enabling system according to the present embodiment.
FIG. 8B is a diagram illustrating an example of changing a production plan in the industrial demand response enabling system according to the present embodiment.
FIG. 8C is a diagram illustrating an example of changing a production plan in the industrial demand response enabling system according to the present embodiment.
FIG. 9 is a flowchart illustrating a processing procedure of updating a demand response capacity list table in the industrial demand response enabling system according to the present embodiment.
FIG. 10 is a diagram illustrating an example of displaying the value of reducible electric power in the industrial demand response enabling system according to the present embodiment.
FIG. 11 is a diagram illustrating a schematic configuration of a production plan amendment implementation determination system provided in the industrial demand response enabling system according to the present embodiment.
FIG. 12 is a flowchart illustrating a processing procedure of a production plan amendment implementation determination system provided in the industrial demand response enabling system according to the present embodiment.
FIG. 13 is a diagram illustrating an example of an energy consumption amount calculation method in the industrial demand response enabling system according to the present embodiment.
FIG. 14 is a diagram illustrating an example of a process of calculating a gain/loss associated with a change in a utilization plan in the industrial demand response enabling system according to the present embodiment.
FIG. 15 is a diagram illustrating an example of a process of calculating a gain/loss associated with a change in a production plan in the industrial demand response enabling system according to the present embodiment.
FIG. 16 is a diagram illustrating an example of a risk list table in an industrial installation which is operated using the industrial demand response enabling system according to the present embodiment.

### Description of Embodiments

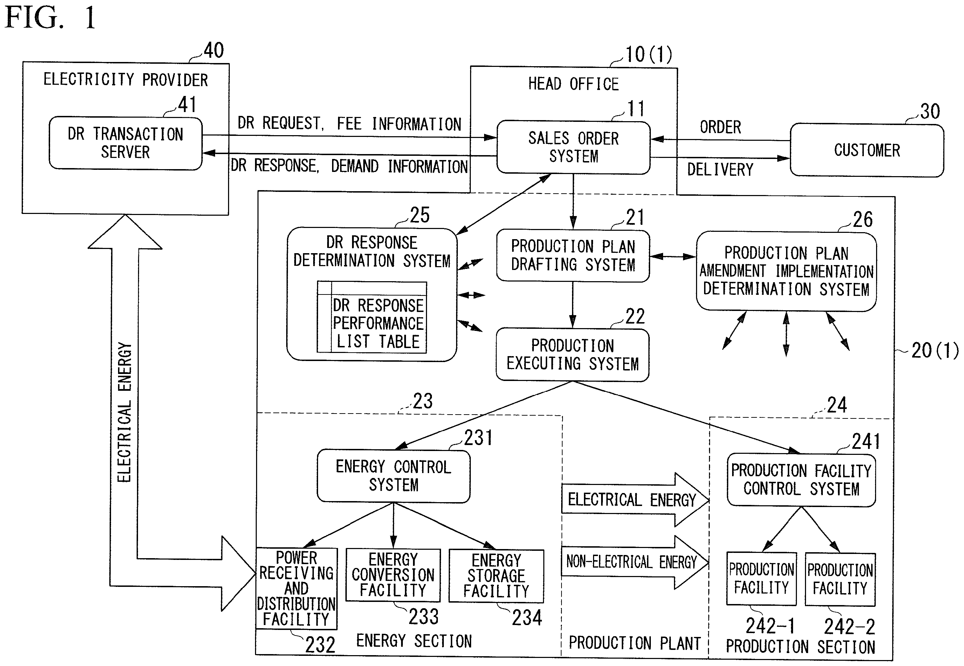

Hereinafter, an embodiment of the present invention will be described with reference to the drawings. FIG. 1 is a diagram illustrating a schematic configuration of an entire system constructed in a facility which is operated using an industrial demand response enabling system according to the present embodiment. The industrial demand response enabling system of the present embodiment is a system for executing an industrial demand response (iDR) requested from an electricity provider by controlling electric power used by a company. FIG. 1 illustrates the relation between a company 1 having a head office 10 and a production plant 20 as an industrial installation, a customer 30 or an electricity provider 40, and the relation between various systems (including a software system) that operate inside the company 1. FIG. 1 illustrates a case in which a production section that produces products in a production plant and an energy section that supplies energy to be used by respective facilities are provided.

The electricity provider 40 that supplies electric power to the production plant 20 which is a consumer may be various types of business operator such as a power generation company that generates electric power, a power transmission and distribution company that transmits and distributes electric power, and a retail company that retails electric power. In the following description, these business operators will be referred to as the "electricity provider 40" regardless of the form of supplying electric power to a consumer (the production plant 20) in order to facilitate description. In the following description, with regard to transmission and reception of various items of information (data or signals) by the industrial demand response enabling system according to the present embodiment, the "electricity provider 40" sometimes means a server apparatus provided in the electricity provider 40.

In FIG. 1, the company 1 includes the head office 10 and the production plant 20 as described above. The head office 10 includes a sales order system 11. The production plant 20 includes a production plan drafting system 21, a production executing system 22, an energy section 23, a production section 24, a demand response (DR) determination system 25, and a production plan amendment implementation determination system 26. The head office 10 may be provided in a different position from the production plant 20 and may be provided in the production plant 20. A plurality of production plants 20 may be present, electric power consumed by these production plants may be added, and a demand response contact may be exchanged with the electricity provider 40.

The head office 10 accepts a product order from the customer 30 with the aid of the sales order system 11. The sales order system 11 issues product production instructions to the production plant 20 so that the product ordered from the customer 30 is produced by a designated delivery date. In this case, the sales order system 11 transmits information necessary when the production plant 20 produces the product such as the name of a product to be produced, a production amount, and a delivery date to the production plan drafting system 21 provided in the production plant 20.

The production plant 20 produces a product on the basis of information on the order of the customer 30 transmitted from the head office 10. In the production plant 20, when the information on the order of the customer 30 is transmitted from the sales order system 11, first, the production plan drafting system 21 drafts a production plan for producing the instructed product on the basis of the information transmitted from the sales order system 11. The production plan drafting system 21 transmits product production execution instructions to the production executing system 22 together with information on the drafted production plan.

Subsequently, the production executing system 22 transmits production instructions including operation instructions for individual production facilities to a production facility control system 241 provided in the production section 24 in order to produce the designated product according to the production plan and the execution instructions transmitted from the production plan drafting system 21. According to the production plan, the production executing system 22 transmits an energy supply plan and execution instructions thereof to an energy control system 231 provided in the energy section 23. After that, the production executing system 22 sequentially collects capacity information such as the intermediate step (a transition of process) of production products or completion of production from the energy control system 231 and the production facility control system 241 and manages execution of production.

In the energy section 23, the energy control system 231 and a power receiving and a distribution facility 232, an energy conversion facility 233, and an energy storage facility 234 as energy facility are provided. The energy control system 231 controls the power receiving and distribution facility 232, the energy conversion facility 233, and the energy storage facility 234 on the basis of the energy supply plan transmitted from the production executing system 22 and controls the supply of a type and an amount of energy necessary for producing products to the production section 24. Although a case in which the energy supply plan is automatically created and automatically controlled has been described, the energy supply plan may be created and control partially by a human.

The power receiving and distribution facility 232 is a facility that purchases electrical energy from the electricity provider 40 and distributes and supplies the electrical energy to the respective facilities in the production plant 20. The power receiving and distribution facility 232 supplies the purchased electrical energy to the production section 24 according to the control of the energy control system 231. The power receiving and distribution facility 232 also supplies electrical energy to a facility such as lighting or air-conditioners provided in various sections in the production plant 20 such as an executive section or a management section, for example.

The energy conversion facility 233 is a facility that supplies energy other than electric power (hereinafter referred to as a "non-electrical energy") to the production section 24. The non-electrical energy is fuel such as natural gas or heavy oil or heat energy such as steam or hot and cold water generated by combusting these types of fuel using a boiler, for example. The energy conversion facility 233 also includes a facility (that is, a private power generation facility) that converts non-electrical energy to electrical energy such as a steam power generator that converts steam to electric power by driving a turbine using steam, for example. The electrical energy converted from non-electrical energy by the energy conversion facility 233 may be also supplied to the production section 24 via the power receiving and distribution facility 232.

The energy storage facility 234 has a function of storing energy and supplying the stored energy to a demand destination as necessary. The energy storage facility 234 includes a facility such as a storage battery or a heat storage tank, for example. By supplying the energy stored in the energy storage facility 234 to the production plant 20, a deficit in energy being used by the production plant 20 may be compensated for and large variations in a short time period may be prevented. The energy storage facility 234 may accumulate energy in its original form and may sometimes accumulate energy by converting it dynamically, mechanically, chemically, thermodynamically, or electrically.

When distributing and supplying electrical energy to respective facilities in the production plant 20, the power receiving and distribution facility 232 may distribute and supply the electrical energy converted from the non-electrical energy by the energy conversion facility 233 or the electrical energy stored in the energy storage facility 234 as well as distributing and supplying the electrical energy purchased from the electricity provider 40 as described above. In this case, the power receiving and distribution facility 232 may distribute and supply the electrical energy supplied from the energy conversion facility 233 or the energy storage facility 234 in addition to the electrical energy purchased from the electricity provider 40. That is, the power receiving and distribution facility 232 may reduce the amount of electrical energy purchased from the electricity provider 40, compensate for a deficiency in amount of electrical energy with the electrical energy supplied from the energy conversion facility 233 or the energy storage facility 234, and distribute and supply the electrical energy to the respective facilities in the production plant 20.

The power receiving and distribution facility 232 may sell the electrical energy converted by the energy conversion facility 233 or the electrical energy stored in the energy storage facility 234 to the electricity provider 40 as well as purchasing electrical energy from the electricity provider 40. That is, the power receiving and distribution facility 232 may sell surplus electrical energy which is not used by the respective facilities in the production plant 20 to the electricity provider 40. A power selling facility (not illustrated) different from the power receiving and distribution facility 232 may sell the electrical energy to the electricity provider 40.

In the production section 24, the production facility control system 241 and a plurality of production facilities (production facilities 242-1 and 242-2) are provided. The production facility control system 241 controls the operation of production facility used for producing products on the basis of production instructions including operation instructions for individual production facilities, transmitted from the production executing system 22. Energy necessary for operating the production facility is supplied from the energy section 23.

The production facilities 242-1 and 242-2 are facilities that produce (manufactures) products using the electrical energy and the non-electrical energy supplied from the energy section 23. That is, the production facilities 242-1 and 242-2 in the production plant 20 correspond to the sites of production activity and final consumers that consume a largest amount of respective types of energy. The production facilities are various types of facility such as a manufacturing facility for a continuous production process that produces liquid products or intermediate products such as petroleum or chemicals or a manufacturing facility for a discrete production process that processes materials (raw materials) with a machine or the like to create products (intermediate products) and assembling the products to manufacture final products. Although a case in which two production facilities 242-1 and 242-2 are provided in the production section 24 is illustrated in FIG. 1, only one production facility may be provided in the production section 24 and a larger number of production facilities may be provided.

The electricity provider 40 may send a request for execution of an industrial demand response (iDR) to the company 1 in the event of poor electric power conditions or the like. In this case, a demand response (DR) transaction server 41 provided in the electricity provider 40 sends a DR request signal indicating a request for a demand response and fee information of the demand response to the head office 10 of the company 1. The DR request signal includes information that designates a reduction amount of electric power in each time period requested by the electricity provider 40 in the demand response. The fee information includes information on a plan to change an electric power cost indicating the cost in each time period of the electric power provided by the electricity provider 40. For example, the fee information may include information on a unit price of electric power in each time period, information on an incentive paid when the production plant 20 executes a demand response to reduce electric power (that is, when the production plant 20 creates a negative wattage), and information on the fee of a penalty awarded when the production plant 20 does not execute a demand response.

In the company 1, the sales order system 11 provided in the head office 10 receives the DR request signal and the fee information transmitted from the electricity provider 40. The sales order system 11 transmits the data of the received DR request signal and the fee information to the production plant 20. In the production plant 20, the industrial demand response enabling system of the present embodiment receives the data of the DR request signal and the fee information transmitted from the sales order system 11. The industrial demand response enabling system of the present embodiment is configured to include the demand response determination system 25. When it is possible to amend the production plan as a response to the demand response, the industrial demand response enabling system is configured to include the production plan amendment implementation determination system 26. In the following description, a case in which the industrial demand response enabling system of the present embodiment is configured to include both the demand response determination system 25 and the production plan amendment implementation determination system 26 will be described.

The industrial demand response enabling system of the present embodiment is a system that determines whether a requested demand response can be enabled (that is, whether a request for a demand response requested from the electricity provider 40 is accepted) when there is a request for an industrial demand response (iDR) from the electricity provider 40. The industrial demand response enabling system of the present embodiment may be a system that responds to the electricity provider 40 according to the determination result and transmits instructions to execute a process corresponding to the demand response to the production executing system 22.

More specifically, the industrial demand response enabling system determines whether a demand response corresponding to the DR request signal can be enabled (that is, whether the request of the demand response requested from the electricity provider 40 is accepted) on the basis of the data of the DR request signal and the fee information transmitted from the sales order system 11.

FIG. 1 illustrates a case in which the demand response determination system 25 and the production plan amendment implementation determination system 26 included in the industrial demand response enabling system of the present embodiment are disposed independently from other systems in the production plant 20. However, the configuration of the industrial demand response enabling system of the present embodiment is not limited to the configuration illustrated in FIG. 1. For example, the function of the demand response determination system 25 or the function of the production plan amendment implementation determination system 26 may be incorporated into (added to) production plan drafting application software that operates in the production plan drafting system 21 as a function of add-on software or a macro program and may operate in the production plan drafting system 21. In this case, the add-on software or the macro program that executes the function of the demand response determination system 25 or the function of the production plan amendment implementation determination system 26 may be provided by being recorded on a recording medium that is readable by the respective systems provided in the company 1.

In determination of whether a demand response can be enabled in the industrial demand response enabling system, first, the demand response determination system 25 determines whether the demand response can be enabled just by changing the operating states of respective facilities in the production plant 20. When it is determined that the demand response can be enabled just by changing the operating states of the respective facilities, it is determined whether the demand response can be enabled by changing the current production plan. In this case, in the industrial demand response enabling system, the production plan amendment implementation determination system 26 calculates a gain/loss of the production plant 20 obtained by changing the production plan and determines whether the changed production plan can be implemented. The industrial demand response enabling system transmits the determination result to the sales order system 11. In this case, the industrial demand response enabling system also transmits information on the amount (reduction amount) of electric power that can be reduced according to the demand response to the sales order system 11.

The sales order system 11 transmits a DR response signal and demand information with respect to the DR request signal transmitted from the electricity provider 40 to the demand response transaction server 41 of the electricity provider 40 on the basis of the information on the determination result as to whether the demand response can be enabled and an electric power reduction amount, transmitted from the demand response determination system 25 included in the industrial demand response enabling system. The DR response signal includes information indicating a determination result as to whether the requested demand response is accepted. The demand information includes information such as an electric power reduction amount that can be reduced according to the request of the demand response and a time period in which electric power can be reduced.

However, the present invention is not limited to a configuration in which the DR response signal, the demand information, and the like are transmitted from the sales order system 11 to the demand response transaction server 41 of the electricity provider 40, and for example, the industrial demand response enabling system such as the demand response determination system 25 may transmit the DR response signal, the demand information, and the like directly to the demand response transaction server 41 of the electricity provider 40 or via a certain system. In this configuration, the sales order system 11 in the following description is replaced with the electricity provider 40.

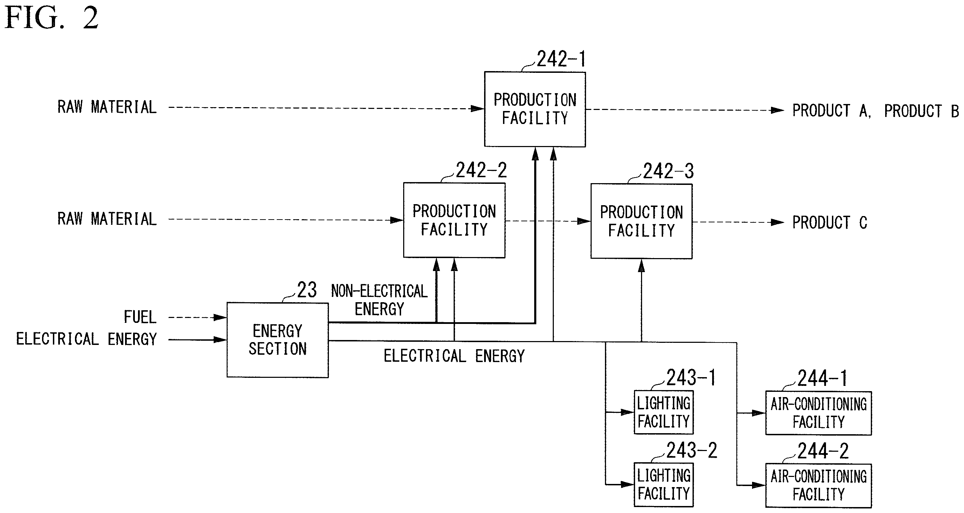

Hereinafter, the industrial demand response enabling system of the present embodiment will be described in more detail. First, an example of a facility in the production plant 20 which is operated using the industrial demand response enabling system of the present embodiment will be described. FIG. 2 is a diagram illustrating an example of a configuration of a facility in an industrial installation which is operated using the industrial demand response enabling system of the present embodiment. FIG. 2 also illustrates the respective facilities installed in the production plant 20 illustrated in FIG. 1 and the energy section 23 that supplies electrical energy or non-electrical energy to respective facilities.

The production facilities 242-1 to 242-3 are facilities which are provided in the production section 24 to produce (manufacture) products using the electrical energy and the non-electrical energy supplied from the energy section 23. More specifically, the production facility 242-1 is a manufacturing facility that processes raw materials to manufacture a product A or B. The production facility 242-2 is a manufacturing facility that processes raw materials to manufacture an intermediate product C1 for manufacturing a product C. The production facility 242-3 is a manufacturing facility that processes the intermediate product C1 to manufacture the product C. A storage facility (not illustrated) such as a storage tank, for example, that stores the intermediate product C1 manufactured by the production facility 242-2 until the production facility 242-3 processes the intermediate product C1 to manufacture the product C is provided between the production facility 242-2 and the production facility 242-3.

The lighting facilities 243-1 and 243-2 are lighting facilities provided in the production plant 20 so as to be lit using the electrical energy supplied from the energy section 23. The air-conditioning facilities 244-1 and 244-2 are air-conditioning facilities provided in the production plant 20 so as to operate using the electrical energy supplied from the energy section 23. The lighting facilities 243-1 and 243-2 and the air-conditioning facilities 244-1 and 244-2 may include a facility which is not directly associated with production of products in the production plant 20. A facility which is not directly associated with production of products can be partially stopped or be operated with its capacity reduced over a short time period without any influence on the operation of the production plant 20. In the following description, it is assumed that the lighting facility 243-2 and the air-conditioning facility 244-2 are facilities which can be partially stopped or be operated with their capacity reduced.

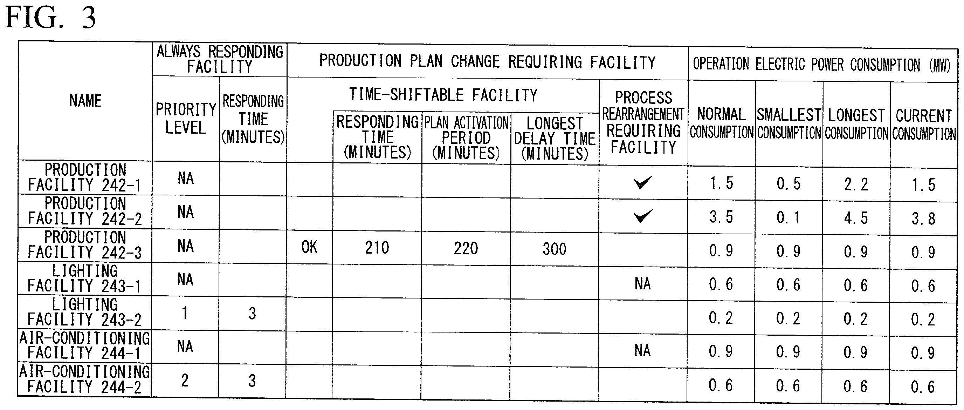

FIG. 3 is a diagram illustrating an example of a demand response capacity list table of respective facilities installed in an industrial installation which is operated using the industrial demand response enabling system according to the present embodiment. The demand response capacity list table is a table in which electric power used during operation and conditions when responding to the demand response are summarized for respective facilities.

In the demand response capacity list table illustrated in FIG. 3, the names of respective facilities installed in the production plant 20 are shown in the field "Name".

In the demand response capacity list table, information on a facility capable of always responding to the request of the demand response by partially stopping or reducing capacity is shown in the field "Always responding facility". More specifically, information including "Priority level" when performing control so as to respond to the demand response (that is, when reducing electric power) and "Responding time (minutes)" indicating a time taken until it is possible to respond to the demand response are shown in the field "Always responding facility".

In the demand response capacity list table, information on a facility capable of responding to the request of the demand response by changing a production plan is shown in the field "Production plan change responding facility". The field "Production plan change responding facility" is divided into "Time-shiftable facility" and "Process rearrangement responding facility" depending on a method of changing a production plan. A facility shown in the field "Time-shiftable facility" is a facility which includes a storage facility such as a storage tank, for example, and can respond to the demand response by changing (shifting) an operating time period without any influence on previous or subsequent processes for producing products. Therefore, information including "Responding time (minutes)" indicating a period until it is possible to respond to the demand response, "Time to plan activation (minutes)" indicating a time until an activation time scheduled in the current production plan, and "Longest delay time (minutes)" indicating the longest time by which activation of the facility can be delayed is shown in the field "Time-shiftable facility". The time-shiftable facility can respond to the demand response more easily than the facility shown in the field "Process rearrangement responding facility" although the order (times) of producing products or the type (product name) of products to be produced cannot be rearranged. The facility shown in the field "Process rearrangement responding facility" is a facility capable of responding to the demand response by rearranging the order (times) of producing products or the type (product name) of products to be produced. A "Check" mark indicating that the facility is process rearrangement responding facility for which the order (times) of producing products or the type (product name) thereof can be rearranged is shown in the field "Process rearrangement responding facility". The process rearrangement responding facility can respond to the demand response to a greater extent or for a longer period than the time-shiftable facility since the production plan can be changed for the facility by rearranging the order (times) of producing products or the type (product name) thereof although the facility cannot respond to the demand response easily by shifting the operating time period.

In the demand response capacity list table, information on electric power consumed when respective facilities operate is shown in the field "Operation electric power consumption (MW)". The field "Operation electric power consumption (MW)" is subdivided into "Normal consumption," "Smallest consumption," "Longest consumption," and "Current consumption" depending on an operating state of each facility. The electric power that each facility consumes during normal operation is shown in the field "Normal consumption," and this electric power consumption amount corresponds to an average value of electric power consumption for respective processes for producing products. The smallest and largest electric power consumed by the respective facilities are shown in the fields "Smallest consumption" and "Longest consumption," respectively, and the electric power consumption amounts correspond to the electric power consumption in an operating state in which least electric power is consumed during production of products and the electric power consumption in an operating state in which most electric power is consumed, respectively. The electrical energy consumed in the current operating state is shown in the field "Current consumption". Therefore, depending on the operating state executed currently, the electric power consumption amount shown in the field "Current consumption" may be larger than the electric power consumption amount shown in the field "Normal consumption" like for the production facility 242-2, for example.

For example, in the demand response capacity list table illustrated in FIG. 3, the production facility 242-1 is a facility capable of responding to the demand response by changing the type (product name) of products or intermediate products to be produced, the order (times) of production, a production amount, and the like. For example, the production facility 242-1 responds to the demand response by producing a product B instead of a product A, reversing the order of manufacturing products so that a product D which was manufactured later than a product C is manufactured before the product C, and manufacturing a large number of products at a time. The demand response capacity list table illustrates that electric power can be reduced by 1.5 (MW) normally, 0.5 (MW) at least, and 2.2 (MW) at most by performing control so as to rearrange the type of products manufactured by the production facility 242-1. In the following description, "changing the type (product name) of products or intermediate products to be produced, the order (times) of production, the production amount, and the like" is referred to as "rearranging of processes".

For example, in the demand response capacity list table illustrated in FIG. 3, the production facility 242-2 is a facility capable of responding to the demand response without any influence on the production facility 242-3 that processes the intermediate product C1 to manufacture the product C by rearranging processes when producing products (that is, storing the manufactured intermediate product C1 in a storage tank or the like, for example). The demand response capacity list table illustrates that electric power can be reduced by 3.5 (MW) normally, 0.1 (MW) at least, and 4.5 (MW) at most by performing control so as to rearrange the production process of the production facility 242-2.

For example, in the demand response capacity list table illustrated in FIG. 3, the production facility 242-3 is a facility capable of responding to the demand response by shifting the operating time period (that is, by delaying the operating time period). The demand response capacity list table illustrates that the production facility 242-3 can respond to the demand response after the elapse of 210 (minutes) and the electric power can be reduced according to the demand response for 90 (minutes) by changing the schedule in which the facility is to be activated after the elapse of 220 (minutes) in the current production plan so that the facility is activated after the elapse of 300 (minutes) at most. In this case, the electric power reduction amount is always 0.9 (MW).

For example, the demand response capacity list table illustrated in FIG. 3 illustrates that the lighting facility 243-2 is a facility capable of always responding to the request of the demand response, and the facility can be changed to an operating state corresponding to the demand response after the elapse of 3 (minutes) (that is, the facility can be partially stopped or the capacity thereof can be reduced) when the facility is controlled such that it responds to the demand response. In this case, the electric power reduction amount is always 0.2 (MW). The responding time (minutes) (=3 (minutes)) includes a period required for broadcasting an announcement or the like to a section which uses the lighting facility 243-2 when the lighting facility 243-2 is controlled such that it responds to the demand response, for example. Although the demand response capacity list table illustrated in FIG. 3 illustrates that the lighting facility 243-2 and the air-conditioning facility 244-2 are facilities capable of always responding to the request of the demand response, the field "Priority level" of the demand response capacity list table illustrates that the lighting facility 243-2 has a high priority level when performing control so as to respond to the demand response. Therefore, when reduction of electric power corresponding to the reduction amount requested by the demand response can be achieved by controlling the lighting facility 243-2 having a high priority level, the air-conditioning facility 244-2 having a low priority level may not be controlled such that it responds to the demand response.

For example, in the demand response capacity list table illustrated in FIG. 3, the lighting facility 243-1 and the air-conditioning facility 244-1 do not belong to any field. This indicates that the lighting facility 243-1 and the air-conditioning facility 244-1 are not capable of responding to the demand response.

The respective facilities installed in the production plant 20 are subdivided into an always responding facility, a time-shiftable facility, process rearrangement responding facility, and another facility depending on the demand response capacity list table, and the table illustrates the amount of electric power by which the respective facilities can reduce when responding to the demand response. The demand response capacity list table is referred to by the industrial demand response enabling system when determining whether or not to accept the demand response requested from the electricity provider 40. That is, the industrial demand response enabling system can specify a facility which is to be reduced when responding to the demand response by referring to the demand response capacity list table and calculate the value of reducible electric power for respective facilities.

For example, a case in which a demand response to reduce 0.5 MW of electric power for 30 minutes after the elapse of 10 minutes is requested from the electricity provider 40 will be considered. In this case, the industrial demand response enabling system ascertains that 0.8 (MW) of electric power obtained by adding 0.2 (MW) from the lighting facility 243-2 and 0.6 (MW) from the air-conditioning facility 244-2 can be reduced by stopping the lighting facility 243-2 and the air-conditioning facility 244-2 by calculating the electric power reduction amount by referring to the demand response capacity list table illustrated in FIG. 3.

For example, a case in which a demand response to reduce electric power of 1.5 MW for 30 minutes after the elapse of 240 minutes is requested from the electricity provider 40 will be considered. In this case, the industrial demand response enabling system understands that electric power of 0.9 (MW) can be reduced by delaying an operation start time of the production facility 242-3 by 50 minutes by calculating the electric power reduction amount by referring to the demand response capacity list table illustrated in FIG. 3. The industrial demand response enabling system understands that electric power of 1.7 (MW) obtained by adding an electric power reduction amount by the production facility 242-3 and an electric power reduction amount by the lighting facility 243-2 and the air-conditioning facility 244-2 can be reduced.

For example, a case in which a demand response to reduce electric power of 2.0 MW for 1 hours after the elapse of 600 minutes is requested from the electricity provider 40 will be considered. In this case, the industrial demand response enabling system understands that it is not possible to respond to the demand response (that is, it is necessary to change the production plan) unless the processes of the facility shown in the field "Process rearrangement responding facility" are rearranged by referring to the demand response capacity list table illustrated in FIG. 3.

The demand response capacity list table is maintained so that the latest information always appears by being periodically updated by the demand response determination system 25, for example. In this case, the respective items of information shown in the fields "Time-shiftable facility" and "Process rearrangement responding facility" are updated on the basis of information which is periodically (for example, every minute or the like) collected from the production executing system 22, the energy control system 231, and the production facility control system 241, for example. Depending on a production facility, the facility may be fixedly set so as to always appear in the field "Process rearrangement responding facility". Depending on a production facility, a sufficient stop period may be secured after the facility stops its operation so that the facility always appears in the field "Time-shiftable facility". Although the data resource pool may be correlated with all facilities installed in the production plant 20 in one-to-one correlation, the demand response capacity list table may be narrowed down to information on a facility which consumes a large amount of electric power. Alternatively, when one facility which consumes a large amount of electric power includes a plurality of devices or apparatuses, the demand response capacity list table may divide information in units of devices or apparatuses to manage the information on the facility hierarchically. Detailed description of an operation of the demand response determination system 25 updating the demand response capacity list table will be provided later.

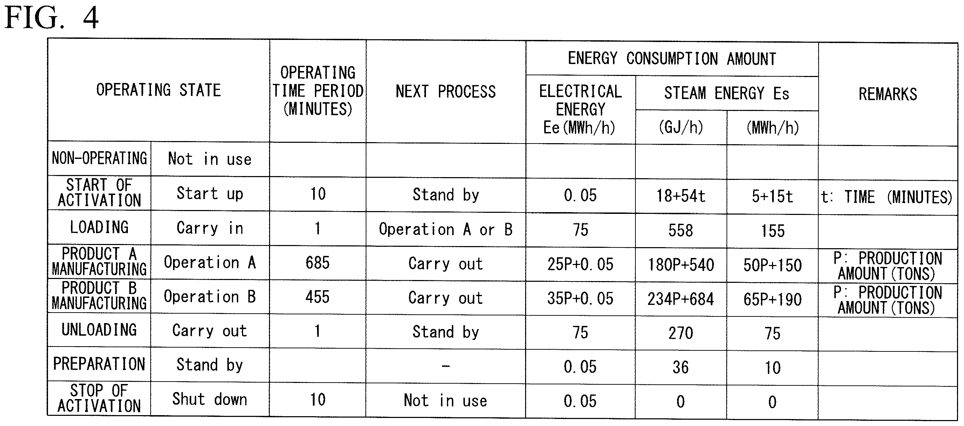

FIG. 4 is a diagram illustrating an example of an energy consumption characteristics table of facility installed in an industrial installation which is operated using the industrial demand response enabling system according to the present embodiment. The energy consumption characteristics table is a table in which a period required when a production facility produces products, a process to be performed subsequently, and an energy consumption amount are summarized for respective processes. FIG. 4 illustrates an example of an energy consumption characteristics table of the production facility 242-1 illustrated in FIG. 2.

In the energy consumption characteristics table illustrated in FIG. 4, the names of processes when the production facility 242-1 manufactures products are shown in the field "Operating state".

In the energy consumption characteristics table, an operating time period of each process is shown in the field "Operating time period (minutes)".

In the energy consumption characteristics table, a subsequent process executed after each process ends is shown in the field "Next process".

In the energy consumption characteristics table, an amount of energy consumed in each process is shown in the field "Energy consumption amount". Since the production facility 242-1 is a production facility that uses electric power and steam as non-electrical energy, the energy consumption characteristics table illustrates consumption characteristics of respective energies. More specifically, an amount (electric power) of electrical energy Ee consumed per unit time is shown in the field "Electrical energy Ee (MWh/h)," and an amount of steam energy Es which is non-electrical energy consumed per unit time is shown in the field "Steam energy Es (GJ/h)". As for the consumption amount of steam energy Es, a consumption amount per unit time when steam energy is converted to electrical energy is shown in the field "Steam energy Es (MWh/h)".

The energy consumption amount may be proportional to an elapsed period and may be proportional to a production amount (processing amount). However, in the energy consumption characteristics table, the energy consumption amount is represented by a calculation formula. Therefore, the meaning and the unit of a variable included in the calculation formula of the energy consumption amount are shown in the field "Remarks" of the energy consumption characteristics table. In the energy consumption characteristics table illustrated in FIG. 4, the unit of the electrical energy Ee and the steam energy Es is MWh/h. This is to indicate the amount (MWh) of electrical energy per unit period (h) (that is, the electric power (MW) that the demand response focuses on.

For example, the energy consumption characteristics table illustrated in FIG. 4 illustrates that the period required for starting activation (Start up) in this operating state is 10 (minutes), the next process is being prepared (Stand by), and the facility uses a certain electrical energy Es of 0.05 (MWh/h) per unit time in this operating state and uses a steam energy Es of 18 + 54t (GJ/h) = 5 + 15t (MWh/h) which increases with time. Here, "variable t" is time (minutes), and the steam energy in the operating state of start-of-activation (Start up) increases at the rate of 54 (GJ/h) = 15 (MWh/h) per minute. That is, in the operating state of start-of-activation (Start up), the facility consumes a steam energy of 18 (GJ/h) = 5 (MWh/h) at the start and consumes a steam energy of 558 (GJ/h) = 155 (MWh/h) after the elapse of 10 minutes.

For example, in the energy consumption characteristics table illustrated in FIG. 4, the period required for manufacturing the product B (Operation B) in this operating state is 455 (minutes), the next process is unload (Carry out), and the facility uses an electrical energy Ee of 35P + 0.05 (MWh/h) per unit time in this operating state and a steam energy Es of 234P + 684 (GJ/h) = 65P + 190 (MWh/h). Since "variable P" is a production amount (tons), when 10 tons of product B, for example, is manufactured in the operating state of manufacturing the product B (Operation B), the facility uses the electrical energy Ee of 350.05 (MWh/h) per unit time and the steam energy Es of 3024 (GJ/h)=840 (MWh/h) per unit time.

The energy consumption characteristics table illustrates the energy that the respective facilities installed in the production plant 20 consume in the respective operating states. The energy consumption characteristics table is referred to by the industrial demand response enabling system when calculating reducible electric power upon receiving the demand response requested from the electricity provider 40. That is, the industrial demand response enabling system can calculate the reducible amount of energy for each operating state when the respective facilities respond to the demand response by referring to the energy consumption characteristics table.

The energy consumption characteristics table is a table which is created and updated in order to manage energy in the production plant 20 on the basis of information collected periodically (for example, every minute or the like) from the production executing system 22 or the production facility control system 241 and which is created by an energy management system provided in the production plant 20, for example. However, the energy consumption characteristics table may be created and updated by the demand response determination system 25 or the production plan amendment implementation determination system 26, for example. In this case, the energy consumption characteristics table may be created for the respective facilities installed in the production plant 20 and may be created for each of predetermined groups of facility such as a facility or a production line installed in the production plant 20, for example. When different product names of products are produced by the same production facility, and it is necessary to distinguish the product names since the energy consumption characteristics are greatly different from product name to product name, the respective processes of the production facility may be finely subdivided and the energy consumption characteristics table may be created for each product name of products to be produced.

When the energy consumption characteristics table is updated by the demand response determination system 25 or the production plan amendment implementation determination system 26, and a difference between the value of the electrical energy Ee or the steam energy Es illustrated in the energy consumption characteristics table or an estimated value derived by the calculation formula thereof and the actual energy consumption amount of each facility (that is, the actual value of the energy consumption amount) is large and exceeds a predetermined threshold, a warning may be issued to an administrator of the production plant 20 such that the calculation formula of the energy consumption can be changed. The demand response determination system 25 or the production plan amendment implementation determination system 26 may update the calculation formula of the energy consumption on the basis of the actual value.

Next, the operation of the industrial demand response enabling system according to the present embodiment will be described. As described above, first, the industrial demand response enabling system determines whether the demand response can be enabled just by changing the operating states of the respective facilities in the production plant 20. When it is determined that the demand response cannot be enabled just by changing the operating states of the respective facilities, the industrial demand response enabling system determines whether the demand response can be enabled by changing the current production plan.

### <First processing procedure>

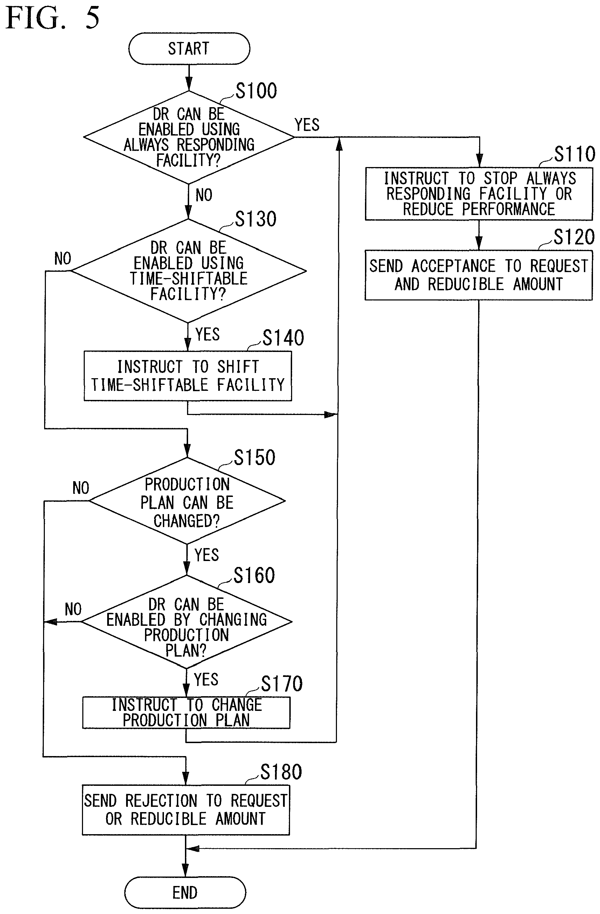

FIG. 5 is a flowchart illustrating a first processing procedure of the industrial demand response enabling system according to the present embodiment. When there is a request of the demand response from the electricity provider 40 and the data of the DR request signal and the fee information is transmitted from the sales order system 11, the industrial demand response enabling system starts a demand response enablability determination process (hereinafter referred to as a "first demand response enablability determination process") according to the first processing procedure illustrated in FIG. 5.

In the first demand response enablability determination process, first, the demand response determination system 25 checks an electric power reduction amount included in the DR request signal transmitted from the sales order system 11. The demand response determination system 25 determines whether the demand response (that is, the requested electric power reduction) can be enabled just by changing the operating state of the always responding facility installed in the production plant 20 by referring to the demand response capacity list table as illustrated in FIG. 3 (step S100).

As described above, the demand response capacity list table is periodically updated (maintained) by the demand response determination system 25, for example, so that always the latest information appears. In this case, the demand response determination system 25 acquires information on an operation program which is being executed or is scheduled to be executed by the production facility and control parameters by accessing the production executing system 22, the energy control system 231, or the production facility control system 241, for example, to update the information shown in the field "Time-shiftable facility" and "Process rearrangement responding facility". Detailed description of the operation of the demand response determination system 25 updating the demand response capacity list table will be provided later.

When it is determined in step S100 that the demand response can be enabled just by changing the operating state of the always responding facility (S100: "YES"), the demand response determination system 25 instructs a system (not illustrated) that manages the always responding facility to stop or reduce capacity of the always responding facility for a designated period from a designated time (step S110). Subsequently, the demand response determination system 25 transmits information indicating that the request of the demand response is accepted and information on the reduction amount of electric power reducible according to the demand response to the sales order system 11 (step S120).

When it is instructed to stop the lighting facility 243-2 and the air-conditioning facility 244-2 illustrated in the demand response capacity list table of FIG. 3 by the processes of steps S110 to S120, the system (not illustrated) that manages the always responding facility stops or reduce the capacity of the lighting facility 243-2 and the air-conditioning facility 244-2 for a designated period from a designated time. However, preparation necessary for broadcasting an announcement to a section which uses the always responding facility starts before a responding time (minutes) of 3 minutes from the designated time. In this way, it is possible to reduce electric power of 0.8 (MW) which is the sum of 0.2 (MW) from the lighting facility 243-2 and 0.6 (MW) from the air-conditioning facility 244-2. The demand response determination system 25 transmits information indicating that the request of the demand response is accepted and information indicating that electric power of 0.8 (MW) is reduced to the sales order system 11. In this way, the sales order system 11 transmits a DR response signal indicating that the requested demand response is accepted and demand information indicating that electric power of 0.8 (MW) is reduced to the demand response transaction server 41 of the electricity provider 40 on the basis of the information transmitted from the demand response determination system 25.

When the requested demand response can be enabled just by changing the operating state of the always responding facility, the risk to the quality and the delivery date of products produced in the production plant 20 is the smallest.

On the other hand, when it is determined in step S100 that the demand response cannot be enabled just by changing the operating state of the always responding facility (step S100: "NO"), the demand response determination system 25 determines whether the demand response can be enabled by changing the production plan by shifting an operating time period of the time-shiftable facility in addition to changing the operating state of the always responding facility (step S130).

When it is determined in step S130 that the demand response can be enabled by shifting the operating time period of the time-shiftable facility and changing the operating state of the always responding facility (step S130: "YES"), the demand response determination system 25 outputs an instruction to shift (delay) the operating time period of the time-shiftable facility to the production executing system 22, for example. In this case, the demand response determination system 25 also outputs information on a period by which the operation of the time-shiftable facility is delayed to the production executing system 22 (step S140). The demand response determination system 25 outputs an instruction to stop or reduce the capacity of the always responding facility for a designated period from a designated time in step S110 and transmits information indicating that the request of the demand response is accepted and information on the reduction amount of electric power reducible according to the demand response to the sales order system 11 in subsequent step S120.

When an instruction to shift (delay) the operating time period of the production facility 242-3 illustrated in the demand response capacity list table of FIG. 3, for example, by a largest delay time (minutes) of 300 (minutes) is output by the process of step S140, the production executing system 22 delays the operating time period of the production facility 242-3 by 300 (minutes). That is, the production executing system 22 delays energy supply instructions to be transmitted to the energy control system 231 provided in the energy section 23 or production instructions to be transmitted to the production facility control system 241 provided in the production section 24 by 300 (minutes). By the processes of steps S110 to S120, the system (not illustrated) that manages the always responding facility stops the lighting facility 243-2 and the air-conditioning facility 244-2 after the elapse of a responding time (minutes) of 3 (minutes). In this way, it is possible to reduce electric power of 1.7 (MW) which is the sum of 0.9 (MW) from the production facility 242-3 and 0.8 (MW) from the lighting facility 243-2 and the air-conditioning facility 244-2. The demand response determination system 25 transmits information indicating that the request of the demand response is accepted and information indicating that electric power of 1.7 (MW) is reduced to the sales order system 11. In this way, the sales order system 11 transmits a DR response signal indicating the requested demand response is accepted and demand information indicating that electric power of 1.7 (MW) is reduced to the demand response transaction server 41 of the electricity provider 40 on the basis of the information transmitted from the demand response determination system 25.

The risk to the quality and the delivery date of products produced in the production plant 20 when the requested demand response is enabled by changing the production plan is larger than that when the requested demand response is enabled just by changing the operating state of the always responding facility. However, among changes in the production plan, a change in the production plan by shifting the operating time period of the time-shiftable facility has a significantly smaller risk than a change in the production plan by rearranging processes.

When the production plan is changed so that the operating time period of the time-shiftable facility is shifted, the demand response determination system 25 may update and manage the demand response capacity list table so that the operating time period of the same time-shiftable facility is not moved again. In this case, an "OK" mark in the field "Time-shiftable facility" of the demand response capacity list table illustrated in FIG. 3, for example, may be removed and the state may be locked by assigning a new "Check" mark to the facility to indicate that the facility is excluded from being a target for the determination in the process of step S130. The time-shiftable facility in which the "OK" mark is removed or the state is locked so that the operating time period is changed such that there can be no further movement thereof returns to its original state after the operation of the time-shiftable facility in the time period ends. However, in order to cope with an emergency situation, there may be a mechanism capable of allowing the administrator of the production plant 20, for example, to immediately return the time-shiftable facility of which the operating time period is changed so as not to be shifted further to its original state.

On the other hand, when it is determined in step S130 that the demand response cannot be enabled by changing the operating state of the always responding facility and shifting the operating time period of the time-shiftable facility (step S130: "NO"), the demand response determination system 25 checks whether the production plan can be changed (step S150). More specifically, it is checked whether there is a production facility in which the "Check" mark indicating that the facility is a facility for which the type (product name) of products or intermediate products to be produced, the order (times) of production, a production amount, or the like can be changed (that is, a facility for which the processes can be rearranged) is shown in the field "Process rearrangement responding facility" of the demand response capacity list table of FIG. 3.

When it is confirmed in step S150 that there is a production facility for which the production plan can be changed (that is, a production facility in which the "Check" mark is shown in the field "Process rearrangement responding facility") (step S150: "YES"), the demand response determination system 25 instructs the production plan drafting system 21, for example, to draft a production plan which rearranges processes when producing products or the types of products to be produced.

According to the instruction to draft the production plan which rearranges the processes when producing products or the types of products to be produced, output from the demand response determination system 25, the production plan drafting system 21 drafts a new production plan (hereinafter referred to as an "amended production plan") which amends the current production plan by referring to an energy consumption characteristics table such as illustrated in FIG. 4. The production plan drafting system 21 outputs the drafted amended production plan to the production plan amendment implementation determination system 26. The production plan amendment implementation determination system 26 calculates a gain/loss obtained when the amended production plan output from the production plan drafting system 21 is implemented on the basis of the data of the fee information transmitted from the sales order system 11 and determines whether the amended production plan is a production plan to be implemented on the basis of the information on the calculated gain/loss. The production plan amendment implementation determination system 26 outputs a determination result on the amended production plan to the demand response determination system 25 via the production plan drafting system 21. Detailed description of the configuration and the operation of the production plan amendment implementation determination system 26 will be provided later.

After that, the demand response determination system 25 determines whether the demand response can be enabled by changing the production plan so as to rearrange the processes when producing products or the types of products to be produced by checking whether the amended production plan output from the production plan amendment implementation determination system 26 via the production plan drafting system 21 is a production plan which meets predetermined conditions (that is, the amended production plan is a production plan which can be employed in the production plant 20) (step S160).

When it is determined in step S 160 that the demand response can be enabled by changing the production plan (step S160: "YES"), the demand response determination system 25 outputs an instruction to change production of products based on the amended production plan (that is, to change the amended production plan of the current production plan) to the production executing system 22 via the production plan drafting system 21, for example (step S170). The demand response determination system 25 outputs an instruction to stop the always responding facility in step S110 and transmits information indicating that the request of the demand response is accepted and information on the reduction amount of electric power reducible according to the demand response to the sales order system 11 in step S120.

On the other hand, when it is determined in step S150 that the production plan cannot be changed (step S150: "NO") or when it is determined in step S160 that the demand response cannot be enabled by changing the production plan (step S160: "NO"), the first demand response enablability determination process of the demand response determination system 25 proceeds to step S180. In the process of step S180, the demand response determination system 25 transmits information indicating that the request of the demand response cannot be accepted (that is, the request of the demand response is rejected) to the sales order system 11. In this way, the sales order system 11 transmits a DR response signal indicating that the request of the demand response cannot be accepted to the demand response transaction server 41 of the electricity provider 40 on the basis of the information transmitted from the demand response determination system 25.

In the process of step S180 of the first demand response enablability determination process, the demand response determination system 25 may transmit information on a reduction amount of electric power reducible without changing the production plan to the sales order system 11 to inform that a portion of the requested electric power reduction amount can be reduced although it is not possible to respond to the entire request of the demand response. For example, the demand response determination system 25 may transmit information indicating that electric power of 0.8 (MW) can be reduced by stopping the lighting facility 243-2 and the air-conditioning facility 244-2 and electric power of 0.9 (MW) can be reduced by shifting the operating time period of the production facility 242-3 to the sales order system 11 on the basis of the demand response capacity list table of FIG. 3. That is, the demand response determination system 25 may transmit demand information indicating that electric power of 0.8 (MW) and/or electric power of 0.9 (MW) can be reduced to the demand response transaction server 41 of the electricity provider 40 via the sales order system 11.

In the demand response capacity list table illustrated in FIG. 3, a case in which the same value is put in the respective fields of "Normal consumption," "Smallest consumption," "Longest consumption," and "Current consumption" of the production facility 242-3, the lighting facility 243-2, and the air-conditioning facility 244-2 is illustrated. However, the consumption amount of electric power of the respective facilities may be different for each field of the normal, smallest, largest, and current consumption. Due to this, when information indicating a portion of the requested electric power reduction amount can be reduced is transmitted to the sales order system 11, the information on the electric power consumption amount calculated using the information in the field "Smallest consumption," for example, may be transmitted. This is because the information in the field "Smallest consumption" indicates the smallest consumption amount of electric power consumed by the respective facilities. Although a case in which information on the electric power consumption amount calculated using the information in the field "Smallest consumption" is transmitted has been described in this example, the reducible consumption amount of electric power may be calculated using information in other fields. In this case, information indicating the field used for calculating the consumption amount may be also transmitted to the sales order system 11.

In this way, in the first demand response enablability determination process of the industrial demand response enabling system, it is determined whether the requested demand response can be enabled just by changing the operating state of the always responding facility installed in the production plant 20 by referring to the demand response capacity list table. When it is determined that the demand response cannot be enabled just by changing the operating state of the always responding facility installed in the production plant 20, it is determined whether the requested demand response can be enabled by changing the production plan for the time-shiftable facility and the process rearrangement responding facility. That is, in the first demand response enablability determination process of the industrial demand response enabling system, it is determined whether the requested demand response is to be implemented or not by taking the risk to the quality or the delivery date of products produced in the production plant 20 and the risk associated with a change in the production plan into consideration.

In the first demand response enablability determination process illustrated in FIG. 5, a processing procedure in which, after an instruction corresponding to a determination result is output to a corresponding facility or the production plan drafting system 21, information indicating the request of the demand response is accepted and information on the reduction amount of electric power reducible according to the demand response are transmitted to the sales order system 11 has been described. However, the outputting of the instruction to the facility or the production plan drafting system 21 and the transmission of the information to the sales order system 11 may be performed in a reverse order. That is, after the information indicating that the request of the demand response is accepted and the information on the reduction amount of electric power reducible according to the demand response are transmitted to the sales order system 11, the instruction corresponding to the determination result may be output to the corresponding facility or the production plan drafting system 21.

In the first demand response enablability determination process illustrated in FIG. 5, a case in which the process is performed by focusing on whether the requested demand response can be enabled has been described. However, an electric power reduction period is designated in the request of the demand response transmitted from the electricity provider 40. Due to this, in the demand response enablability determination process of the industrial demand response enabling system, an electric power reduction period may also be taken into consideration in addition to the electric power reduction amount.

### <Second processing procedure>

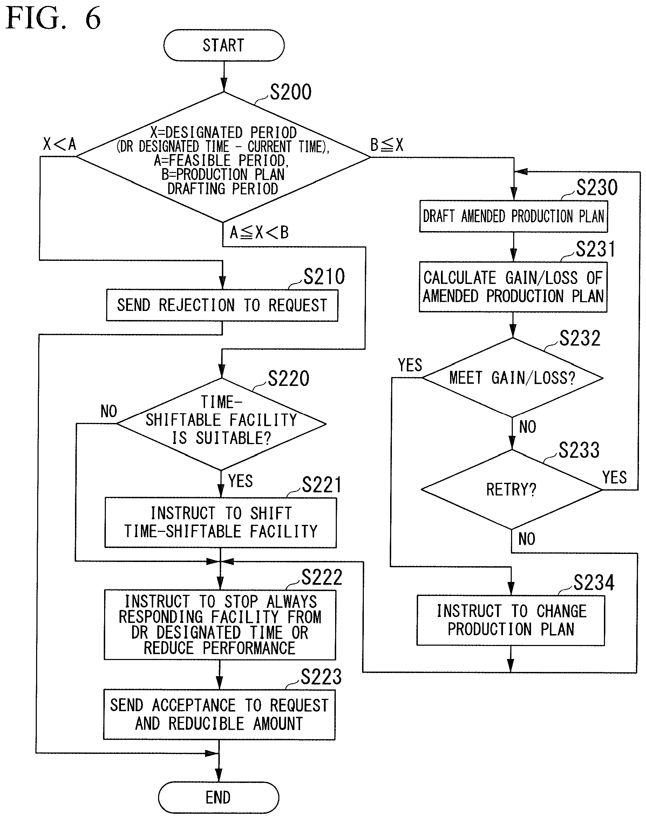

FIG. 6 is a flowchart illustrating a second processing procedure of the industrial demand response enabling system according to the present embodiment. When there is a request of the demand response from the electricity provider 40 and the data of the DR request signal and the fee information is transmitted from the sales order system 11, the industrial demand response enabling system acquires information on a period designated in the request of the demand response and starts a demand response enablability determination process (hereinafter referred to as a "second demand response enablability determination process") according to the second processing procedure illustrated in FIG. 6.

In the second demand response enablability determination process, first, the demand response determination system 25 acquires information on an electric power reduction amount included in the DR request signal transmitted from the sales order system 11 and a time (hereinafter referred to as a "DR designated time") at which electric power reduction is designated and sets a difference between the DR designated time and a current time as a designated period X. The demand response determination system 25 acquires a period (the information in the field "Responding time (minutes)") in which the respective facilities can respond to the demand response from such a demand response capacity list table as illustrated in FIG. 3 and sets a period that needs to be secured at least to respond to the demand response as a feasible period A. The demand response determination system 25 sets a period required for drafting a new production plan (an amended production plan) as a production plan drafting period B. The demand response determination system 25 compares the designated period X, the feasible period A, and the production plan drafting period B (step S200).

When it is determined in step S200 that the designated period X is shorter than the feasible period A of a facility (a facility shown in the field "Always responding facility" in the demand response capacity list table illustrated in FIG. 3) that can respond earliest to the demand response ((designated period X) < (feasible period A)), the flow proceeds to step S210. The feasible period A includes a processing period of a computer associated with responding to the demand response and a longest period of time required for the respective facilities to create an operating state corresponding to the demand response. For example, the feasible period A also includes a period required for broadcasting an announcement or the like to a section which uses the always responding facility. In the process of step S210, the demand response determination system 25 transmits information indicating that the request of the demand response cannot be accepted (that the request of the demand response is rejected) to the sales order system 11 because there is no facility capable of enabling the demand response by the designated period X. In this way, the sales order system 11 transmits a DR response signal indicating that the request of the demand response cannot be accepted to the demand response transaction server 41 of the electricity provider 40 on the basis of the information transmitted from the demand response determination system 25.

In the process of step S210 of the second demand response enablability determination process, the demand response determination system 25 may transmit a time at which it is possible to respond earliest to the demand response and information on the reduction amount of reducible electric power to the sales order system 11 to inform that it is possible to respond to the requested electric power reduction although it is not possible to respond to the request of the demand response by the designated period. For example, the demand response determination system 25 may transmit information indicating that electric power of 0.8 (MW) can be reduced after the elapse of 3 (minutes) by stopping or reducing the capacity of the always responding facility and electric power of 0.9 (MW) can be reduced after the elapse of 210 (minutes) by shifting the operating time period of the time-shiftable facility to the sales order system 11 on the basis of the demand response capacity list table of FIG. 3. That is, the demand response determination system 25 may transmit demand information indicating that electric power of 0.8 (MW) can be reduced after the elapse of 3 (minutes) and electric power of 0.9 (MW) can be reduced after the elapse of 210 (minutes) to the demand response transaction server 41 of the electricity provider 40 via the sales order system 11.

When it is determined in step S200 that the designated period X is equal to or longer than the feasible period A and is shorter than the production plan drafting period B required for drafting an amended production plan ((feasible period A)≤(designated period X)<(production plan drafting period B)), the flow proceeds to step S220. In the process of step S220, the demand response determination system 25 determines whether the time-shiftable facility can meet the demand response at the designated period X (that is, whether the demand response can be enabled by changing the production plan by shifting the operating time period of the time-shiftable facility) (step S220).

When it is determined in step S220 that the time-shiftable facility can meet the demand response at the designated period X (step S220: "YES"), the demand response determination system 25 outputs an instruction to shift (delay) the operating time period of the time-shiftable facility to the production executing system 22, for example. In this case, the demand response determination system 25 also outputs information on a period by which the operation of the time-shiftable facility is delayed to the production executing system 22 (step S221). After that, the second demand response enablability determination process of the demand response determination system 25 proceeds to step S222.

On the other hand, when it is determined in step S220 that the time-shiftable facility cannot meet the demand response at the designated period X (step S220: "NO"), the second demand response enablability determination process of the demand response determination system 25 proceeds to step S222.

After an instruction to shift (delay) the operating time period of the time-shiftable facility is output to the production executing system 22 by the process of step S221, or when it is determined in step S220 that the time-shiftable facility cannot meet the demand response at the designated period X, the demand response determination system 25 outputs an instruction to stop or reduce the capacity of the always responding facility from the DR designated time to a system (not illustrated) that manages the always responding facility in step S222. Subsequently, the demand response determination system 25 outputs the information indicating that the request of the demand response is accepted and information on the reduction amount of electric power reducible according to the demand response to the sales order system 11 (step S223).

When it is determined in step S200 that the designated period X is equal to or longer than the production plan drafting period B ((production plan drafting period B)≤(designated period X)), the flow proceeds to step S230. In the process of step S230, the demand response determination system 25 instructs the production plan drafting system 21, for example, to draft an amended production plan. In this way, the production plan drafting system 21 drafts the amended production plan by referring to such an energy consumption characteristics table as illustrated in FIG. 4 and outputs the drafted amended production plan to the production plan amendment implementation determination system 26 (step S230).

Subsequently, the production plan amendment implementation determination system 26 calculates a gain/loss obtained when the amended production plan output from the production plan drafting system 21 is implemented on the basis of the data of the fee information transmitted from the sales order system 11 and determines whether the amended production plan is a production plan that can be implemented on the basis of the information on the calculated gain/loss. The production plan amendment implementation determination system 26 outputs a determination result on the amended production plan to the demand response determination system 25 via the production plan drafting system 21 (step S231). Detailed description of the configuration and the operation of the production plan amendment implementation determination system 26 will be provided later.

Subsequently, the demand response determination system 25 determines whether the gain/loss of the amended production plan output from the production plan amendment implementation determination system 26 via the production plan drafting system 21 meets a predetermined gain/loss (for example, whether the gain/loss is within a predetermined threshold gain/loss range (step S232). That is, the demand response determination system 25 determines whether the amended production plan is an implementable production plan in step S232.

When it is determined in step S232 that the gain/loss of the amended production plan meets a predetermined gain/loss (step S232: "YES"), the demand response determination system 25 outputs an instruction to change production of products based on the amended production plan (that is, to change the current production plan to the amended production plan) to the production executing system 22 via the production plan drafting system 21, for example (step S234). The demand response determination system 25 outputs an instruction to stop or reduce the capacity of the always responding facility from the DR designated time in step S222 and transmits the information indicating that the request of the demand response is accepted and information on the reduction amount of electric power reducible according to the demand response to the sales order system 11 in subsequent step S223.

On the other hand, when it is determined in step S232 that the gain/loss of the amended production plan does not meet the predetermined gain/loss (step S232: "NO"), the demand response determination system 25 updates the designated period X at the current time and determines whether or not to instruct drafting of another amended production plan (that is, whether or not to retry drafting of the amended production plan) (step S233).

When it is determined in step S233 that drafting of the amended production plan is to be retried (step S233: "YES") (that is, the designated period X is equal to or longer than the production plan drafting period B ((production plan drafting period B) ≤(updated designated period X))), the demand response determination system 25 returns to step S230 and repeats the processes of steps S230 to S232. In the second demand response enablability determination process of the demand response determination system 25, the number of times the flow returns to step S230 according to the determination in step S233 to repeat the processes of steps S230 to S232 may be determined in advance.

On the other hand, when it is determined in step S233 that the drafting of the amended production plan is not to be retried (step S233: "NO") (that is, the updated designated period X is shorter than the production plan drafting period B ((production plan drafting period B)> (updated designated period X))), the second demand response enablability determination process of the demand response determination system 25 proceeds to step S222. The demand response determination system 25 outputs an instruction to stop or reduce the capacity of the always responding facility from the DR designated time in step S222 and transmits the information indicating that the request of the demand response is accepted and information on the reduction amount of electric power reducible according to the demand response to the sales order system 11 in subsequent step S223.

In this way, in the second demand response enablability determination process of the industrial demand response enabling system, it is determined whether the requested demand response can be enabled at a time designated from the electricity provider 40 by referring to the demand response capacity list table.

The industrial demand response enabling system may determine whether the demand response can be enabled on the basis of a combination of the idea of the first demand response enablability determination process and the idea of the second demand response enablability determination process. That is, final determination on the enablability of the demand response may be made on the basis of a combination of the determination focusing on whether the demand response of the requested reduction amount can be enabled and the determination focusing on whether the demand response can be enabled at a designated time.

In the second demand response enablability determination process illustrated in FIG. 6, a processing procedure in which information is transmitted to the sales order system 11 after an instruction is output to a facility or the production plan drafting system 21 has been described. However, similarly to the first demand response enablability determination process illustrated in FIG. 5, the instruction corresponding to the determination result may be output to the corresponding facility or the production plan drafting system 21 after the information is transmitted to the sales order system 11.

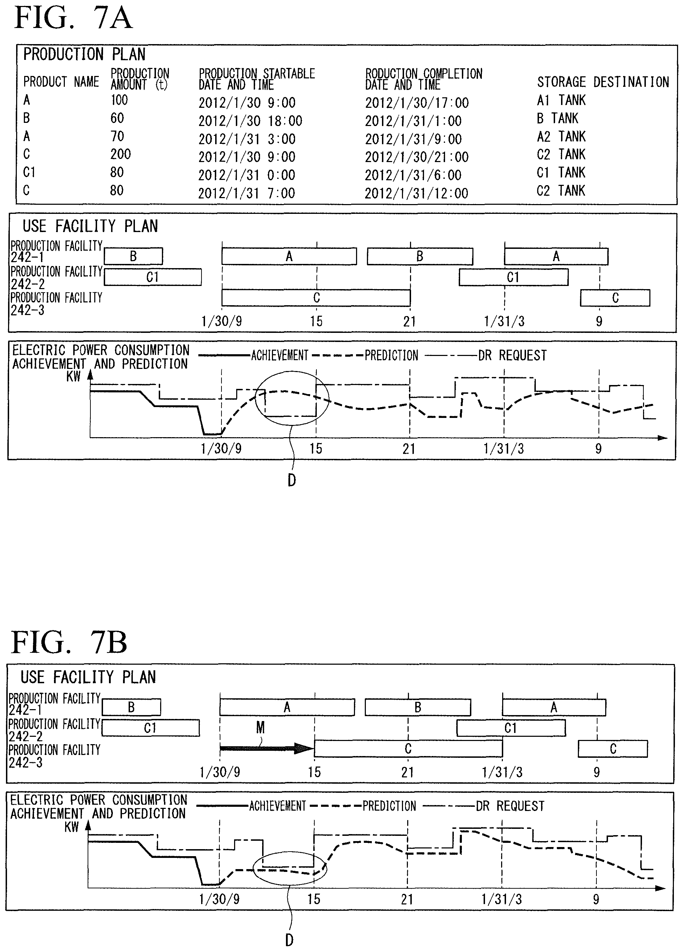

Next, an example of a case in which a demand response is enabled in the industrial demand response enabling system of the present embodiment will be described. First, the production plan that the industrial demand response enabling system determines will be described. FIGs. 7A and 7B are diagrams illustrating an example of a production plan of which the enablability is determined by the industrial demand response enabling system according to the present embodiment. FIG. 7A illustrates an example of a current production plan, a utilization plan (a facility usage plan) of each facility based on the current production plan, and a graph of actual values and predicted values of electric power consumed in this facility usage plan. FIG. 7B illustrates an example of a use facility plan based on an amended production plan and a graph of an actual value and a predicted value of electric power. The graphs of the actual value and the predicted value of electric power illustrated in FIGs. 7A and 7B also illustrate a requested value (a consumption amount when 100% of the reduction request is applied) of the consumption amount of electric power in each time period in the demand response requested from the electricity provider 40.

The use facility plan illustrated in the middle part of FIG. 7A is a diagram illustrating a utilization plan (that is, an operating time period of respective facilities) of respective facilities illustrated based on the current production plan (see the top section of FIG. 7A). By looking at this use facility plan, it is possible to check the product name of products produced by the respective production facilities and an operating time period (that is, an overview of a timing at which products are produced and a vacant period until the next product is produced). By shifting the operating time period of each facility within the range of the vacant period illustrated in the use facility plan (that is, by shifting the operating time period without any influence on previous or subsequent processes of producing products), it is possible to easily enable the requested demand response in a period designated from the electricity provider 40. That is, as long as it is possible to change the production plan so as to create a vacant period for the production facility in a designated time period on the basis of the facility usage plan, it is possible to respond to a demand response with a smaller risk than when changing the production plan by rearranging processes which may affect the entire production plan.

For example, according to the current production plan, in the graph of the actual value and the predicted value of electric power illustrated at the bottom section of FIG. 7A, when the electric power reduction amounts (DR request) are compared in each time period of the demand response requested from the electricity provider 40, it is understood that the request of the demand response is not met in a period from 12:00 to 15:00 of January 30, indicated by the region D. Therefore, the demand response determination system 25 shifts (delays) the operating time period of the production facility 242-3 as indicated by the shift M in the use facility plan in the top section of FIG. 7B by referring to such a demand response capacity list table as illustrated in FIG. 3 in the first or second demand response enablability determination process. In this way, after the production plan is changed, the request of the demand response is met in the period indicated by the region D in the same time period as the current production plan as illustrated in the graph of the actual value and the predicted value of electric power illustrated at the bottom section of FIG. 7B.

FIG. 7B illustrates an example in which the request of the demand response is met by shifting (delaying) the operating time period of the production facility 242-3 which is a time-shiftable facility. However, even if the production plan is changed by rearranging the processes of the process rearrangement responding facility, it is possible to obtain a result which meets the request of the demand response as illustrated in the graph of the actual value and the predicted value of electric power illustrated at the bottom section of FIG. 7B.

In the first or second demand response enablability determination process, when the operating time period of the time-shiftable facility is shifted, it may be determined whether or not to shift the operating time period of the time-shiftable facility by taking the relation between the time-shiftable facility of which the operating time period is scheduled to be shifted and facilities positioned at a stage in front of or to the rear of the time-shiftable facility into consideration rather than just checking such an apparent vacant period of the respective facilities as illustrated in the use facility plan. An example of the relation with the facilities positioned at a stage in front of or to the rear of the time-shiftable facility, taken into consideration includes the relation (a so-called supply-chain relationship) of supply of materials for producing products. For example, whether a facility is used for purposes other than production of products such as maintenance (for example, washing) and inspection of respective facilities and a time required for that may also be taken into consideration.

For example, when facilities are in a supply-chain relationship, even if the time-shiftable facility has a sufficient vacant period, it may not be possible to shift (delay) the operating time to a maximum extent unless there is a facility that stores raw materials supplied from a facility positioned at a stage in front of the time-shiftable facility. Even if there is a facility that stores the raw material to be supplied to the time-shiftable facility, since it is not possible to store an amount of raw material equal to or larger than the amount storable in the storage facility, there is a limitation on a period in which the operating time period can be shifted (delayed). For example, even if there is a facility that stores intermediate products manufactured by the time-shiftable facility, it may be necessary to stop the operation of a facility positioned at the rear stage of the time-shiftable facility unless the facility positioned at the rear stage operates before the facility consumes all intermediate products stored therein. Therefore, it is not possible to use all vacant periods for shifting the operating time period. Due to this, the demand response determination system 25 determines an operation shifting period by taking limitations associated with such a supply-chain relationship into consideration when shifting (delaying) the operating time period of the time-shiftable facility in the first or second demand response enablability determination process.

For example, as for the relation with maintenance, inspection, or the like of facilities, the maintenance and the inspection have limitations depending on various conditions such as a facility usage frequency, a cumulative operating time, or conditions after a specific facility has been manufactured. When a time-shiftable facility is subjected to maintenance, inspection, or the like, the time-shiftable facility cannot be operated to produce products. Due to this, the demand response determination system 25 determines the operation delay time by taking limitations associated with such maintenance, inspection, or the like of the facility into consideration when shifting (delaying) the operating time period of the time-shiftable facility in the first or second demand response enablability determination process.

However, the time-shiftable facility which is scheduled to be subjected to maintenance, inspection, or the like may not be treated as a target for a facility for which the operating time period may be shifted (delayed). In this case, the time-shiftable facility may not be included as a target for time-shiftable facility for which a vacant period is searched for in the first or second demand response enableability determination process, for example. For example, even if a time-shiftable facility has a vacant period, the time-shiftable facility may not be illustrated as a time-shiftable facility (for example, the "OK" mark may not be shown in the field "Time-shiftable facility" of the demand response capacity list table illustrated in FIG. 3) in the demand response capacity list table. Alternatively, the state of the facility may be locked so that the "Check" mark indicating that the facility is excluded from being a target for the time-shiftable facility for which a vacant period is searched for may be assigned to the facility.

In the industrial demand response enabling system, it is determined whether it is possible to shift (delay) the operating time period of the time-shiftable facility, which is scheduled to be shifted by taking the above-described relation with the respective facilities positioned at the front or rear stage into consideration, and the largest shiftable period when the operating time period is shifted (delayed) or a time at which it is possible to respond to the demand response is calculated and transmitted to the sales order system 11.

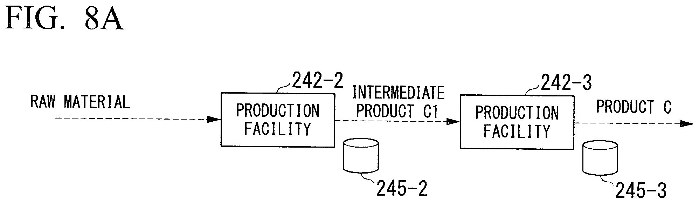

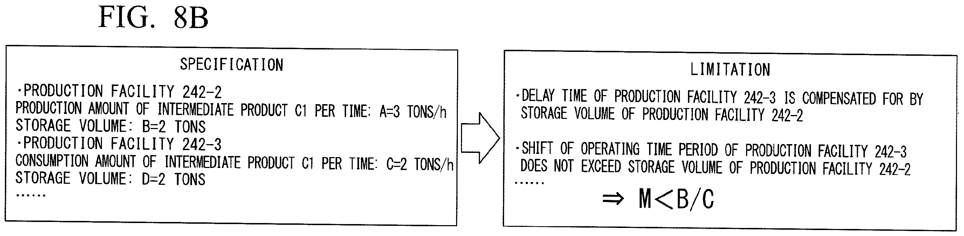

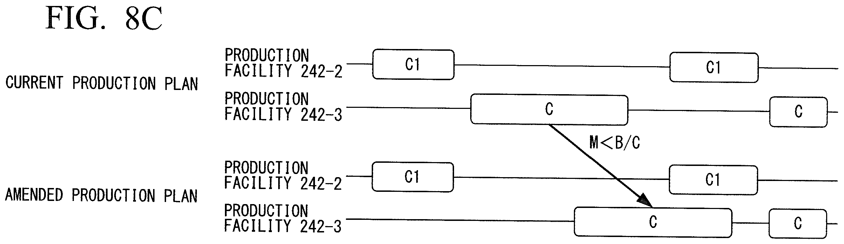

An example of a case in which the operating time period of the time-shiftable facility is shifted (delayed) by taking the relation with respective facilities positioned at the front or rear stage into consideration will be described. FIGs. 8A, 8B, and 8C are diagrams illustrating an example of changing the production plan in the industrial demand response enabling system according to the present embodiment. FIGs. 8A, 8B, and 8C illustrate an example of a case in which the operating time period of the production facility 242-3 which is a time-shiftable facility is shifted (delayed) by taking the limitations associated with the supply-chain into consideration in a path (see FIG. 2) of manufacturing the product C in the production plant 20. FIG. 8A illustrates a configuration of a facility that manufactures the product C, FIG. 8B illustrates the specifications when the production facilities 242-2 and 242-3 manufacture products and the limitations associated with the relation of the supply-chain in the respective production facility, and FIG. 8C illustrates the use facility plans of the current production plan and the amended production plan.

In FIG. 8A, the production facility 242-2 processes raw materials to produce an intermediate product C1 and stores the manufactured intermediate product C1 in a C1 tank 245-2. The production facility 242-3 processes the intermediate product C1 stored in the C1 tank 245-2 to manufacture a product C and stores the manufactured product C in a C2 tank 245-3. In this case, it is assumed that the specifications related to manufacturing of products in the production facility 242-2 state that a production amount A of the intermediate product C1 per unit time is 3 (tons/h) and a storage volume B of the C1 tank 245-2 is 2 (tons), and that the specifications related to manufacturing of products in the production facility 242-3 state that a consumption amount C of the intermediate product C1 per unit time is 2 (tons/h) and a storage volume D of the C2 tank 245-3 is 2 (tons) (see FIG. 8B). Due to this, the following limitations occur from the specifications related to manufacturing of products in the production facilities 242-2 and 242-3, as illustrated in FIG. 8B. That is, the delay time of the production facility 242-3 needs to be compensated for by the storage volume of the production facility 242-2 (that is, the storage volume B of 2 (tons) of the C1 tank 245-2), and the shifting of the operating time period of the production facility 242-3 does not exceed the storage volume of the production facility 242-2 (that is, the storage volume B of 2 (tons) of the C1 tank 245-2).

The demand response determination system 25 determines an operation shift period of the operating time period of the production facility 242-3 which is the time-shiftable facility illustrated in the use facility plan of the current production plan by taking such limitations as illustrated in FIG. 8B into consideration when shifting (delaying) the operating time period illustrated in the use facility plan of the amended production plan in the first or second demand response enablability determination process as illustrated in FIG. 8C. More specifically, a value ((storage volume B)/(consumption amount C)) obtained by dividing the storage volume B of the C1 tank 245-2 by the consumption amount C of the intermediate product C1 per unit time in the production facility 242-3 as a longest period of time of shifting (delaying) the operating time period of the production facility 242-3 so that the intermediate product C1 to be stored in the C1 tank 245-2 serving as a buffer in the supply-chain between the production facilities 242-2 and 242-3 is always present. That is, (storage volume B)/(consumption amount C) = (2 (tons))/(2 (tons/h)) = 1 (h) is calculated as the longest period of time of shifting (delaying) the operating time period of the production facility 242-3. The demand response determination system 25 determines a time period shorter than the calculated longest period of time as a time shift M (M<B/C) of the production facility 242-3. That is, a period (M<1) shorter than 1 hours is determined as a period of delaying the operation of the production facility 242-3.

In this way, even if the operating time period of the production facility 242-3 which is a time-shiftable facility is shifted (delayed), it is possible to easily respond to the demand response with a small risk without restricting the operation of the production facility 242-2 (that is, without any influence on the previous and subsequent processes of producing products) depending on the relation with the supply-chain between the production facilities 242-2 and 242-3.

Information on the supply-chain relationship and the maintenance, inspection, or the like of a facility can be obtained from the information on an operation program which is being executed or is scheduled to be executed by the production facility and the control parameters by accessing the production executing system 22, the energy control system 231, or the production facility control system 241, for example. Examples of the information acquired from the operation program and the control parameters include current information (hereinafter referred to as "current facility information") of respective facilities, such as a volume of raw materials capable of being stored, the consumption amount of raw materials per unit time in the respective facilities, and a cumulative operating time for respective facilities. The demand response determination system 25 updates (maintains) the demand response capacity list table on the basis of the current facility information acquired from the information on the operation program and the control parameters as described above.

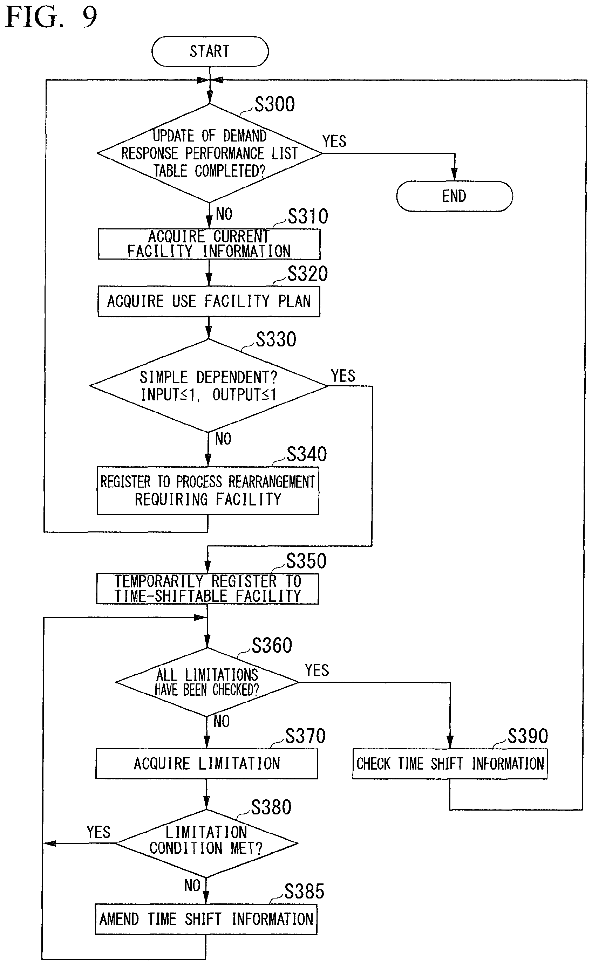

A method of updating the demand response capacity list table by the demand response determination system 25 will be described. FIG. 9 is a flowchart illustrating a processing procedure of updating the demand response capacity list table in the industrial demand response enabling system according to the present embodiment. The demand response determination system 25 performs a process (hereinafter referred to as a "demand response capacity list table updating process") of updating the demand response capacity list table periodically or before starting the first or second demand response enablability determination process.

In the demand response capacity list table updating process, the respective facilities illustrated in the demand response capacity list table are sequentially updated. The demand response determination system 25 checks whether the update of the information on all facilities illustrated in the demand response capacity list table is completed (that is, whether the update of the demand response capacity list table is completed) (step S300).

When it is confirmed in step S300 that the update of the demand response capacity list table is completed (step S300: "YES"), the demand response determination system 25 completes the demand response capacity list table updating process. On the other hand, when it is confirmed in step S400 that the update of the demand response capacity list table is not completed (step S300: "NO"), the demand response determination system 25 acquires the current facility information from the first facility in which the update is not completed (step S310). For example, a consumption amount (current consumption) of electric power currently being used by a facility for which the current facility information has been acquired and information indicating whether a facility is in a locked state such as to be excluded from being a target for time-shiftable facility for which a vacant period is searched for may be acquired.

Subsequently, the demand response determination system 25 acquires the use facility plan in the current production plan from the production executing system 22, for example (step S320). After that, the demand response determination system 25 checks the dependency between the first facility of which the current facility information is acquired and the respective facilities positioned at a stage in front of or to the rear of the first facility on the basis of the acquired use facility plan (step S330). In the process of step S330, when the number of types of the input (for example, the raw material supplied to the production facility) to the facility is equal to or smaller than 1 and the number of types of the output (for example, the product or the header field produced by the production facility) of the facility is equal to or smaller than 1, the demand response determination system 25 determines that the dependency of this facility is "Simple dependent" and that the facility is a target time-shiftable facility of which the operating time period is to be shifted (delayed). On the other hand, in other cases (that is, the number of types of the input to the facility or the output of the facility is plural), the demand response determination system 25 determines that the dependency of this facility is "Not simple dependent" and that the facility is not a target process rearrangement responding facility of which the operating time period is to be shifted (delayed). This is because the fact that the number of types of the input to the facility or the output of the facility is plural means that this facility has many dependencies with facility positioned at a stage in front of or to the rear of the facility and it is generally difficult to determine the shiftability of the operating time period (that is, it is not easy to shift the operating time period).

When it is confirmed in step S330 that the dependency of the first facility of which the current facility information is acquired is not simple dependent (step S330: "NO"), the demand response determination system 25 registers this facility in the demand response capacity list table as a process rearrangement responding facility (step S340). More specifically, a "Check" mark is inserted in the field "Process rearrangement responding facility" in the field "Production plan change responding facility" of this facility illustrated in the demand response capacity list table. The demand response determination system 25 returns to step S300 to check whether the update of the demand response capacity list table is completed and repeats the demand response capacity list table updating process on the next facility in which the updated is not completed when the update of the demand response capacity list table is not completed (step S300: "NO").

On the other hand, when it is confirmed in step S330 that the dependency of the first facility of which the current facility information is acquired is simple dependent (step S300: "YES"), the demand response determination system 25 temporarily registers this facility in the demand response capacity list table as a time-shiftable facility (step S350). More specifically, a mark (for example, a "Temporary" mark) indicating temporary registration instead of the "OK" mark is inserted in the field "Time-shiftable facility" in the field of "Production plan change responding facility" of this facility illustrated in the demand response capacity list table. The use facility plan is checked time-sequentially to illustrate the information in the fields "Responding time (minutes)," "Plan activation period (minutes)," and "Longest delay time (minutes)" (hereinafter referred to as "time shift information" when respective items of information are collectively illustrated). In the demand response capacity list table illustrated in FIG. 3, although only one period is illustrated in each item of time shift information of the production facility 242-3 which is a time-shiftable facility, a plurality of periods may be illustrated.

Subsequently, the demand response determination system 25 checks whether the checking of all limitations on the shift of the operating time period is completed for the first facility which is temporarily registered as the time-shiftable facility (step S360).

When it is confirmed in step S360 that the checking of all limitations is not completed (step S360: "NO"), the demand response determination system 25 acquires the limitations on the shift of the operating time period of the first facility which is temporarily registered as the time-shiftable facility from this facility, for example (step S370).

Subsequently, the demand response determination system 25 checks whether the apparent vacant period of this facility meets the conditions of the acquired limitations on the shift of the operating time period (that is, whether all period of the apparent vacant period can be used as a period of shifting the operating time period despite the conditions of the limitations) (step S380).

When it is confirmed in step S380 that the vacant period meets the conditions of the limitations (step S380: "YES"), the demand response determination system 25 returns to step S360 to check whether the checking of all limitations on the shift of the operating time period is completed and repeats the process of checking whether the vacant period meets the conditions of the limitations when the checking of all limitations is not completed (step S360: "NO").

On the other hand, when it is confirmed in step S380 that the vacant period does not meet the conditions of the limitations (step S380: "NO"), the demand response determination system 25 corrects the time shift information of the temporarily registered time-shiftable facility so as to meet the conditions of the limitations on the shift of the operating time period (step S385). For example, by shortening the apparent vacant period so as to meet the conditions of the limitations, all periods of the apparent vacant period is corrected so as to be usable for shifting the operating time period. The demand response determination system 25 returns to step S360 to repeat the process of checking whether the checking of all limitations on the shift of the operating time period is completed and checking whether the vacant period meets the conditions of the limitations.

When it is confirmed in step S360 that the checking of all limitations is completed (step S360: "YES"), the demand response determination system 25 confirms the current information of the time-shiftable facility (that is, the time shift information temporarily registered in step S385 or the time shift information corrected in step S385) (step S390). More specifically, a mark indicating temporary registration shown in the field "Time-shiftable facility" is changed to the "OK" mark in order to indicate that the time shift information of the first facility which is temporarily registered as the time-shiftable facility in the demand response capacity list table or the time shift information corrected to a value that meets the conditions of the limitations on the shift of the operating time period is the confirmed information.

As described above, in the demand response capacity list table updating process of the industrial demand response enabling system, the demand response determination system 25 checks whether the respective facilities illustrated in the demand response capacity list table meet the conditions of all limitations on the shift of the operating time period periodically or before starting the demand response enablability determination process. The demand response determination system 25 sequentially updates the information on the respective facilities illustrated in the demand response capacity list table according to the checking result. In this way, in the demand response capacity list table, only a facility which meets the conditions of various limitations (that is, a facility which clears the conditions) such as limitations on the relation with respective facilities positioned at the front or rear stage or the limitations associated with the maintenance, inspection, or the like of a facility is illustrated in as the time-shiftable facility. Furthermore, always the latest information is illustrated in the demand response capacity list table. In this way, in the industrial demand response enabling system, it is possible to easily change the production plan by shifting the operating time period of the time-shiftable facility without any influence on the previous and subsequent processes of producing products and to correspond to the demand response with a small risk.

When a plurality of time-shiftable facilities having the same time shift information is registered in the demand response capacity list table, a priority level may be set and registered according to a predetermined condition such as the order of rod guide or the descending order of normal consumption amounts. In this way, the demand response determination system 25 can shift (delay) the operating time period sequentially from the time-shiftable facility having the highest priority level and to reduce the number of time-shiftable facility of which the time period is shifted to meet the request of the demand response.

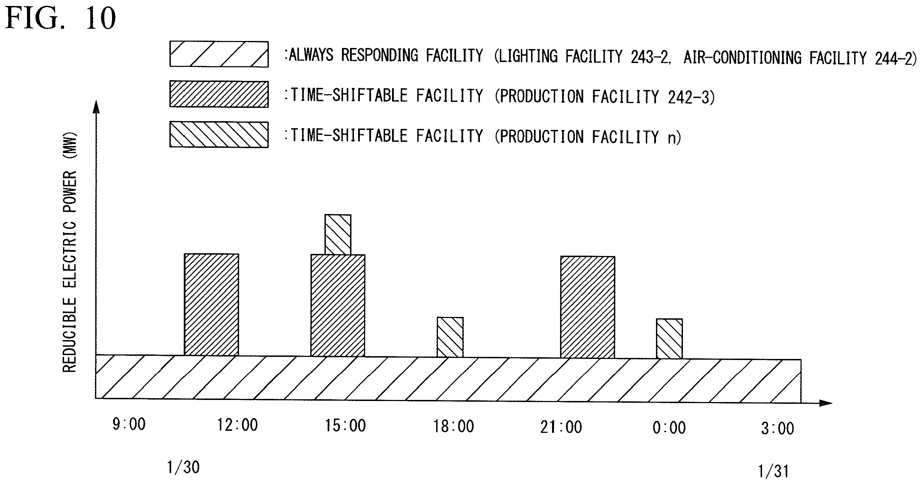

In the industrial demand response enabling system, the reducible amount of electric power based on the updated demand response capacity list table may be visualized by displaying the same on a display means or the like provided in the demand response determination system 25, for example. FIG. 10 is a diagram illustrating an example of displaying the value of reducible electric power in the industrial demand response enabling system according to the present embodiment. FIG. 10 illustrates an example of a case in which a change in reducible electric power is visualized in a time-axis direction of a graph in which the vertical axis represents the value of reducible electric power and the horizontal axis represents time. In this way, it is possible to check the magnitude of the reducible electric power reducible by the respective facilities installed in the production plant 20 in each time period.

The magnitude of the reducible electric power in each time period can be calculated on the basis of the demand response capacity list table updated in the demand response capacity list table updating process by the demand response determination system 25. More specifically, the magnitude of the reducible electric power in each time period can be calculated by adding the information in the field "Smallest consumption" of the always responding facility and the time-shiftable facility illustrated in the demand response capacity list table for the respective time periods. When consumption of electric power can be predicted using such an energy consumption characteristics table as illustrated in FIG. 4, it is possible to predict the reducible electric power with higher accuracy rather than pessimistic numerical prediction of "Smallest consumption". Therefore, the visualized reducible electric power may not be the magnitude obtained by adding the respective items of information in the field "Smallest consumption" in the respective time periods, but the respective items of information in the fields "Normal consumption," "Longest consumption," "Current consumption" may be added for the respective time periods and the reducible electric power in the respective time periods may be visualized for each field of the normal, smallest, largest, and current consumption.

In the display example illustrated in FIG. 10, the reducible electric power corresponding to the production facility 242-3 which is a time-shiftable facility is illustrated in three time periods. This indicates that there are three time periods in which the operating time period of the production facility 242-3 can be shifted. In this case, there are three items of time shift information corresponding to the production facility 242-3 registered as the time-shiftable facility in the demand response capacity list table.

The energy conversion facility 233 and the energy storage facility 234 are provided in the energy section 23 of the production plant 20 as described above. Due to this, in the production plant 20, it is possible to supply the electrical energy obtained by the energy conversion facility 233 converting non-electrical energy and the electrical energy accumulated in the energy storage facility 234 to the production facility. Therefore, the industrial demand response enabling system may visualize these types of electric power (that is, the electric power which is not purchased from the electricity provider 40 and which is not to be reduced according to the demand response) and display the same on a display means or the like so as to be superimposed on the display example illustrated in FIG. 10.

By visualizing the reducible amount of electric power in this manner, an administrator of the production plant 20, for example, can visually check whether the demand response can be enabled. The industrial demand response enabling system can assist the administrator of the production plant 20, for example, in making correct determination when finally determining the enablability of the requested demand response by visualizing the reducible amount of electric power.

Next, the production plan amendment implementation determination system 26 that forms the industrial demand response enabling system according to the present embodiment will be described. The production plan amendment implementation determination system 26 is activated when it is determined in the demand response enablability determination process of the demand response determination system 25 that it is necessary to change the production plan by rearranging the processes when producing products or the types of products to be produced in order to enable the requested demand response. The production plan amendment implementation determination system 26 calculates a gain/loss of the production plant 20 in the amended production plan output from the production plan drafting system 21 and determines whether the amended production plan can be implemented.

In this case, the production plan amendment implementation determination system 26 calculates the gain/loss of the amended production plan on the basis of the current production plan, the amended production plan, the limitations on production of products in the production plant 20, the energy consumption characteristics of each process in the respective facilities in the production plant 20, and the data of fee information transmitted from the sales order system 11 (that is, the data of fee information transmitted from the electricity provider 40). The production plan amendment implementation determination system 26 determines whether or not to change the current production plan to the amended production plan on the basis of the calculated gain/loss. That is, it is determined whether the amended production plan is a production plan that can be employed and implemented in the production plant 20. The production plan amendment implementation determination system 26 outputs the determination result to the production plan drafting system 21.

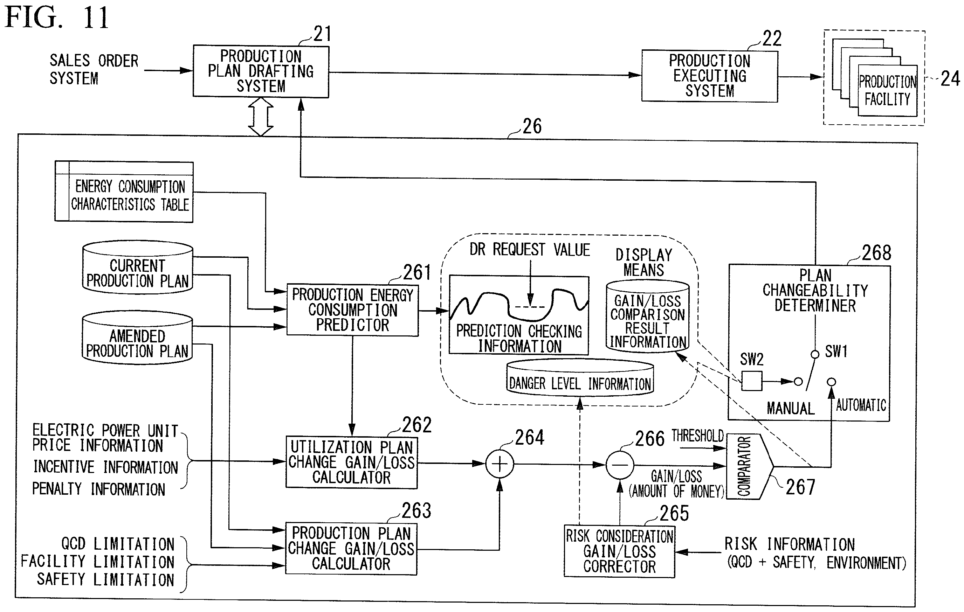

FIG. 11 is a diagram illustrating a schematic configuration of the production plan amendment implementation determination system 26 provided in the industrial demand response enabling system according to the present embodiment. The production plan amendment implementation determination system 26 includes a production energy consumption predictor 261, a utilization plan change gain/loss calculator 262, a production plan change gain/loss calculator 263, a gain/loss adder 264, a risk consideration gain/loss corrector 265, a risk subtractor 266, a comparator 267, and a plan changeability determiner 268. FIG. 11 also illustrates systems in the production plant 20 associated with the production plan amendment implementation determination system 26. FIG. 11 also illustrates information used in the processes of the respective constituent elements provided in the production plan amendment implementation determination system 26 and information output by the respective constituent elements.

The production energy consumption predictor 261 calculates a predicted value of the consumption amount of electric power in the respective facilities in the production plant 20 on the basis of such an energy consumption characteristics table of respective facilities as illustrated in FIG. 4 for each of the current production plan and the amended production plan drafted by the production plan drafting system 21. Here, the predicted value of the consumption amount of electric power calculated by the production energy consumption predictor 261 is a predicted value of electric power to be consumed by the respective facilities in the future. The production energy consumption predictor 261 outputs the calculated predicted value of the consumption amount of electric power to the utilization plan change gain/loss calculator 262.

The respective facilities and the operating state thereof illustrated in the energy consumption characteristics table may further subdivided into a plurality of apparatuses and operating states (that is, steps (phases)). For example, the large unit of the production facility 242-1 can be decomposed into a plurality of apparatuses such as a feed pump, a heater, an agitator, and the like, these apparatuses operate stepwise in a prescribed phase depending on a production method of the product A or B. In this case, the consumption amount of energy actually used in the respective operating states is not an amount which is constant in the respective operating states as illustrated in the energy consumption characteristics table, but the amount of consumed energy varies depending on the respective phases which are executed in a finely subdivided manner. That is, the amount of energy consumed in the respective phases of the production facility may not be the value of the amount of consumed energy shown in the field "Energy consumption amount" in the respective operating states illustrated in the energy consumption characteristics table or the constant value represented by the calculation formula. The energy consumption characteristics in the respective finely subdivided phases may be added to the energy consumption characteristics table as necessary. The production energy consumption predictor 261 may summarize the consumption amounts of energy illustrated in the respective subdivided phases to the energy consumption amount of the entire process, for example, by averaging, and then, calculate the simplified consumption amount of electric power in the respective facilities.

The degree of detail of the consumption amount of electric power to which the production energy consumption predictor 261 calculates the consumption amount of electric power in the respective facilities may be determined according to an energy consumption amount in the respective operating states or the reduction amount of electric power in respective periods in the requested demand response.

The predicted value of the consumption amount of electric power calculated by the production energy consumption predictor 261 may be visualized by displaying the same on a display means or the like provided in the production plan amendment implementation determination system 26, for example. In this case, the production energy consumption predictor 261 may display the predicted value of the consumption amount of electric power calculated for the current production plan and the predicted value of the consumption amount of electric power calculated for the amended production plan so as to be distinguished from each other and may calculate and display a difference between the respective predicted values of the consumption amount of electric power. FIG. 11 also illustrates an example of a display state in which the predicted value of the consumption amount of electric power calculated by the production energy consumption predictor 261 is displayed on a display means provided in the production plan amendment implementation determination system 26 as prediction checking information. In this way, for example, an administrator of the production plant 20 can visually check the predicted value of the consumption amount of electric power calculated by the production energy consumption predictor 261.

The utilization plan change gain/loss calculator 262 calculates a gain/loss associated with a change in a utilization plan by changing the current production plan to the amended production plan on the basis of the predicted values of the consumption amount of electric power for the current production plan and the amended production plan output from the production energy consumption predictor 261 and the data of fee information transmitted from the sales order system 11. More specifically, the utilization plan change gain/loss calculator 262 calculates a profit in each time period of the current production plan and the amended production plan on the basis of unit price information of electric power in each time period, incentive information, and penalty information included in the data of fee information transmitted from the sales order system 11. The utilization plan change gain/loss calculator 262 calculates a difference between the profit in the current production plan and the profit in the amended production plan in the period requested by the demand response as a gain/loss. The utilization plan change gain/loss calculator 262 outputs the calculated gain/loss (hereinafter referred to as a "utilization plan change gain/loss") to the gain/loss adder 264.

In the production plant 20, when the electrical energy obtained by the energy conversion facility 233 converting the non-electrical energy or the electrical energy accumulated in the energy storage facility 234 is supplied to and used by the production facility instead of the electric power purchased from the electricity provider 40, the cost of these types of electric power is also included when the utilization plan change gain/loss calculator 262 calculates the gain/loss associated with a change in the utilization plan.

The production plan change gain/loss calculator 263 calculates the gain/loss obtained by changing the current production plan to the amended production plan on the basis of the limitations in the production plant 20 with respect to each of the current production plan and the amended production plan drafted by the production plan drafting system 21. For example, the production plan change gain/loss calculator 263 calculates a loss when the production plan is changed so that the delivery date of the product B is delayed by 4 hours.

Examples of the limitations in the production plant 20 include a limitation (hereinafter referred to as a "QCD limitation") on quality, cost, and delivery when products are produced in the production plant 20, a limitation (hereinafter referred to as a "facility limitation") on operations of the respective facilities installed in the production plant 20, and a limitation (hereinafter referred to as a "safety limitation") on safety conditions when products are produced by the respective facilities installed in the production plant 20. The production plan change gain/loss calculator 263 checks the content of the respective limitations in the production plant 20 on the basis of the use facility plans of the current production plan and the amended production plan and selects a target limitation associated with the change in the use facility plan. The production plan change gain/loss calculator 263 calculates the sum of costs occurring in the selected target limitation as the gain/loss. The production plan change gain/loss calculator 263 outputs the calculated gain/loss (hereinafter referred to as a "production plan change gain/loss") to the gain/loss adder 264.

The gain/loss adder 264 adds the utilization plan change gain/loss output from the utilization plan change gain/loss calculator 262 and the production plan change gain/loss output from the production plan change gain/loss calculator 263 and outputs the added gain/loss (hereinafter referred to as a "plan change gain/loss") to the risk subtractor 266.

The risk consideration gain/loss corrector 265 calculates a gain/loss of a risk occurring when the current production plan is changed to the amended production plan on the basis of information on the risks to the respective items of QCD, safety, and environment in the production plant 20, which are listed in advance. More specifically, the risk consideration gain/loss corrector 265 checks risk factors included in a risk list table in which the risks resulting from the supply-chain relationship of the respective facilities and the dependency of maintenance, inspection, or the like of facility are listed in advance and are summarized as a list table and selects a target risk associated with the change from the current production plan to the amended production plan. The risk consideration gain/loss corrector 265 calculates the sum of losses occurring when the selected target risk occurs as a gain/loss. The risk consideration gain/loss corrector 265 outputs the calculated gain/loss (hereinafter referred to as a "risk consideration gain/loss") to the risk subtractor 266.

The target risk determined by the risk consideration gain/loss corrector 265 may be visualized by displaying the same on a display means or the like provided in the production plan amendment implementation determination system 26, for example. In this case, the risk consideration gain/loss corrector 265 may display the selected target risk and non-selected risks so as to be distinguished from each other. FIG. 11 illustrates an example of a display state in which the risk selected by the risk consideration gain/loss corrector 265 is displayed on the display means provided in the production plan amendment implementation determination system 26 as danger level information. In this way, an administrator of the production plant 20, for example can visually check the risk selected by the risk consideration gain/loss corrector 265.

The risk subtractor 266 subtracts the risk consideration gain/loss output from the risk consideration gain/loss corrector 265 from the plan change gain/loss output from the gain/loss adder 264 to correct the plan change gain/loss to the risk consideration gain/loss and outputs the corrected gain/loss (hereinafter referred to as a "demand response gain/loss") to the comparator 267.

The comparator 267 compares a predetermined gain/loss threshold (hereinafter referred to as a "demand response determination threshold") for determining whether or not to respond to the demand response and the demand response gain/loss output from the risk subtractor 266 and outputs information indicating the comparison result to the plan changeability determiner 268. For example, the comparator 267 outputs a result obtained by calculating the difference between the value of the demand response gain/loss and the demand response determination threshold to the plan changeability determiner 268 as a comparison result.

The information on the comparison result obtained by the comparator 267 may be visualized by displaying the same on a display means or the like provided in the production plan amendment implementation determination system 26, for example. FIG. 11 illustrates an example of a display state in which the information on the comparison result obtained by the comparator 267 is displayed on the display means provided in the production plan amendment implementation determination system 26 as gain/loss comparison result information. In this way, the administrator of the production plant 20, for example, can visually check the information on the comparison result obtained by the comparator 267.

The plan changeability determiner 268 determines whether the current production plan is to be changed to the amended production plan on the basis of the comparison result between the demand response determination threshold input from the comparator 267 and the demand response gain/loss. The plan changeability determiner 268 outputs the determination result to the production plan drafting system 21. The plan changeability determiner 268 can switch whether the determination on whether the current production plan is to be changed to the amended production plan will be made automatically or manually. Due to this, the plan changeability determiner 268 includes a changeover switch SW1.

When the changeover switch SW1 is set to automatic determination, the plan changeability determiner 268 performs automatic determination on the basis of the information indicating the comparison result output from the comparator 267 and outputs the determination result to the production plan drafting system 21. As a determination method of the plan changeability determiner 268, it may be determined that the production plan is to be changed to the amended production plan when the comparison result between the demand response determination threshold and the demand response gain/loss is plus and it may be determined that the production plan is not to be changed to the amended production plan when the comparison result is minus. That is, it is determined that the production plan is to be changed to the amended production plan when the demand response gain/loss exceeds the demand response determination threshold, and it is determined that the production plan is not to be changed to the amended production plan when the demand response gain/loss is equal to or smaller than the demand response determination threshold.

On the other hand, when the changeover switch SW1 is set to manual determination, and an instruction signal is output from an instruction switch SW2 which is pressed by an administrator of the production plant 20 when it is checked that there is no problem in the comparison result output from the comparator 267, for example, the plan changeability determiner 268 determines that the current production plan is to be changed to the amended production plan and outputs the determination result to the production plan drafting system 21. That is, according to the approval of the administrator of the production plant 20, the determination result that the current production plan is to be changed to the amended production plan is output to the production plan drafting system 21.

Using such a configuration, the production plan amendment implementation determination system 26 calculates the gain/loss associated with the change from the current production plan to the amended production plan and determines whether the current production plan is to be actually changed to the amended production plan on the basis of the information of the calculated gain/loss. That is, the production plan amendment implementation determination system 26 determines whether the amended production plan drafted by the production plan drafting system 21 is an implementable production plan.

Next, the operation of the production plan amendment implementation determination system 26 that forms the industrial demand response enabling system according to the present embodiment. As described above, the production plan amendment implementation determination system 26 is activated when it is determined in the demand response enablability determination process of the demand response determination system 25 that it is necessary to change the production plan by rearranging the processes when producing products or the types of products to be produced and calculates the gain/loss of the production plant 20 in the amended production plan output from the production plan drafting system 21 and determines whether the amended production plan is an implementable production plan.

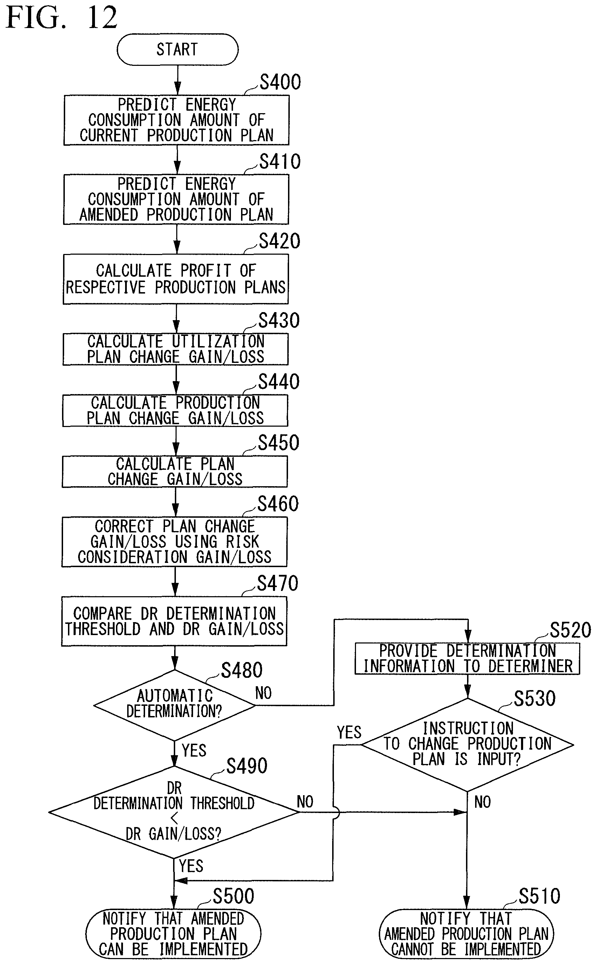

FIG. 12 is a flowchart illustrating a processing procedure of the production plan amendment implementation determination system 26 provided in the industrial demand response enabling system according to the present embodiment. When the production plan amendment implementation determination system 26 is activated and the amended production plan is output from the production plan drafting system 21, a process (hereinafter referred to as an "amended production plan implementability determination process") of determining the implementability of the amended production plan according to the processing procedure illustrated in FIG. 12 starts.

In the amended production plan implementability determination process, first, the production energy consumption predictor 261 predicts the consumption amount of electric power in the current production plan on the basis of such an energy consumption characteristics table of respective facilities as illustrated in FIG. 4. The production energy consumption predictor 261 outputs the predicted value of the consumption amount of electric power in the current production plan to the utilization plan change gain/loss calculator 262 (step S400).

Subsequently, the production energy consumption predictor 261 predicts the consumption amount of electric power in the amended production plan on the basis of the energy consumption characteristics table. The production energy consumption predictor 261 outputs the predicted value of the consumption amount of electric power of the amended production plan to the utilization plan change gain/loss calculator 262 (step S410).

Subsequently, the utilization plan change gain/loss calculator 262 calculates the profits of the current production plan and the amended production plan in each time period on the basis of the predicted values of the consumption amount of electric power of the current production plan and the amended production plan output from the production energy consumption predictor 261 and the unit price information of electric power in each time period, incentive information, and penalty information included in the data of fee information transmitted from the sales order system 11 (step S420). The utilization plan change gain/loss calculator 262 calculates the difference between the profit of the current production plan and the profit of the amended production plan and outputs the same to the gain/loss adder 264 as a utilization plan change gain/loss (step S430).

The production plan change gain/loss calculator 263 determines a target limitation among the limitations in the production plant 20 such as the QCD limitation, the facility limitation, and the safety limitation on the basis of the use facility plans of the current production plan and the amended production plan and calculates the sum of the costs occurring due to the target limitation for the respective production plans. The production plan change gain/loss calculator 263 calculates the difference between the sum of costs occurring due to the target limitation in the current production plan and the sum of costs occurring due to the target limitation in the amended production plan and outputs the same to the gain/loss adder 264 as a production plan change gain/loss (step S440).

Subsequently, the gain/loss adder 264 outputs a plan change gain/loss obtained by adding the utilization plan change gain/loss output from the utilization plan change gain/loss calculator 262 and the production plan change gain/loss output from the production plan change gain/loss calculator 263 to the risk subtractor 266 (step S450).

The risk consideration gain/loss corrector 265 selects a target risk associated with the change from the current production plan to the amended production plan among the risk factors included in a risk occurrence probability table, calculates a risk consideration gain/loss for avoiding the selected risk, and outputs the same to the risk subtractor 266. The risk subtractor 266 corrects the plan change gain/loss output from the gain/loss adder 264 using the risk consideration gain/loss output from the risk consideration gain/loss corrector 265 to obtain a demand response gain/loss and outputs the same to the comparator 267 (step S460).

Subsequently, the comparator 267 calculates the difference between the demand response determination threshold and the demand response gain/loss output from the risk subtractor 266 and outputs the difference to the plan changeability determiner 268 as a comparison result (step S470).

Subsequently, the plan changeability determiner 268 checks whether the determination on whether or not to change the current production plan to the amended production plan will be made automatically or manually (step S480). When it is confirmed in step S480 that the determination on whether or not to change the current production plan to the amended production plan will be made automatically (step S480: "YES"), the plan changeability determiner 268 checks whether the demand response gain/loss exceeds the demand response determination threshold on the basis of the comparison result output from the comparator 267 (step S490). That is, it is checked whether the comparison result which is the difference between the demand response determination threshold calculated by the comparator 267 and the demand response gain/loss in step S470 is plus or minus.

When it is confirmed in step S490 that the comparison result output from the comparator 267 is plus (that is, the demand response gain/loss exceeds the demand response determination threshold) (step S490: "YES"), the plan changeability determiner 268 notifies the production plan drafting system 21 of the fact that the amended production plan drafted by the production plan drafting system 21 is an implementable production plan (step S500).

In this way, the production plan drafting system 21 transmits information indicating that a new production plan (that is, an amended production plan) that can be implemented in the production plant 20 is present to the demand response determination system 25. In this way, the demand response determination system 25 instructs the production executing system 22 via the production plan drafting system 21, for example, to produce products based on the amended production plan (that is, to change the current production plan to the amended production plan) and to stop or reduce the capacity of the always responding facility. The demand response determination system 25 transmits the information indicating that the request of the demand response is accepted and information on the reduction amount of electric power reducible according to the demand response to the sales order system 11 (see steps S170 to S120 in FIG. 5 or steps S234 to S223 in FIG. 6).

On the other hand, when it is confirmed in step S490 that the comparison result output from the comparator 267 is minus (that is, the demand response gain/loss is equal to or smaller than the demand response determination threshold) (step S490: "NO"), the plan changeability determiner 268 notifies the production plan drafting system 21 of the fact that the amended production plan drafted by the production plan drafting system 21 is not an implementable production plan (step S510).

In this way, the production plan drafting system 21 transmits information indicating that the amended production plan that can be implemented in the production plant 20 is not present to the demand response determination system 25. In this way, the demand response determination system 25 performs either a process (see step S233 in FIG. 6) of instructing the production plan drafting system 21 to drafter another amended production plan or a process (see steps S150 to S180 in FIG. 5 or steps S233 to S223 in FIG. 6) of transmitting information indicating that the request of the demand response is rejected or information indicating that a portion of the requested reduction amount of electric power can be reduced to the sales order system 11.

On the other hand, when it is confirmed in step S480 that the determination on whether or not to change the current production plan to the amended production plan is not to be performed automatically (that is, manually) (step S480: "NO"), the plan changeability determiner 268 provides information for allowing a determiner (for example, the administrator of the production plant 20) who determines whether or not to change the production plan to determine whether or not to implement the amended production plan drafted by the production plan drafting system 21. In this case, the information provided to the determiner may be visualized by displaying the same on a display means or the like provided in the production plan amendment implementation determination system 26, for example. FIG. 11 illustrates a case in which the predicted value (prediction checking information) of the consumption amount of electric power calculated by the production energy consumption predictor 261, the target risk (danger level information) determined by the risk consideration gain/loss corrector 265, and the comparison result (gain/loss comparison result information) obtained by the comparator 267 are provided in a visualized manner. When providing the information for making the determination on whether the amended production plan drafted by the production plan drafting system 21 will be implemented, the plan changeability determiner 268 may automatically provide the determination result so as to be visualized as a character mark or the like, for example.

Subsequently, the plan changeability determiner 268 checks whether a production plan change instruction is input (step S530). In step S530, whether the production plan change instruction is input can be checked by checking whether an instruction signal is output from the instruction switch SW2 in a predetermined period. For example, when there is a plurality of determiners (for example, the heads of the respective sections in the company 1) who determines whether or not to change the production plan, it is determines that an instruction to implement the amended production plan is input when the production plan change instruction is input from all determiners (that is, the amended production plan is approved by the plurality of determiners). This determination may be made by the majority rule of the plurality of determiners, for example.

When it is confirmed in step S530 that the production plan change instruction is input (that is, the amended production plan is approved) (step S530: "YES"), the plan changeability determiner 268 notifies the production plan drafting system 21 of the fact that the amended production plan drafted by the production plan drafting system 21 is an implementable production plan in step S500.

On the other hand, when it is confirmed in step S530 that the production plan change instruction is not input (that is, the amended production plan is not approved) (step S530: "NO"), the plan changeability determiner 268 notifies the production plan drafting system 21 of the fact that the amended production plan drafted by the production plan drafting system 21 is not an implementable production plan in step S510.

In this way, the production plan amendment implementation determination system 26 calculates the gain/loss of the amended production plan on the basis of the predicted values of the consumption amount of electric power in the production plans of the current production plan and the amended production plan, the data of the fee information transmitted from the sales order system 11, and the limitations and the risks in the production plant 20. The production plan amendment implementation determination system 26 determines whether the amended production plan is an implementable production plan (that is, a production plan which can be employed in the production plant 20) on the basis of the calculated gain/loss. In this way, even if the production plan is changed by rearranging the processes of the process rearrangement responding facility in order to respond to the requested demand response, the production plan can be changed to an amended production plan which causes a small risk to the quality and the delivery of products to be produced in the production plant 20 (that is, which causes a small risk (small loss) to the profit of the production plant 20).

Next, an example of the operations of the respective constituent elements provided in the production plan amendment implementation determination system 26 that forms the industrial demand response enabling system according to the present embodiment will be described. In the following description, it is assumed that the production plan which is the use facility plan illustrated in the middle part of FIG. 7A is a current production plan, a production plan which is the use facility plan illustrated in the top section of FIG. 7B is the amended production plan drafted by the production plan drafting system 21 and input to the production plan amendment implementation determination system 26.

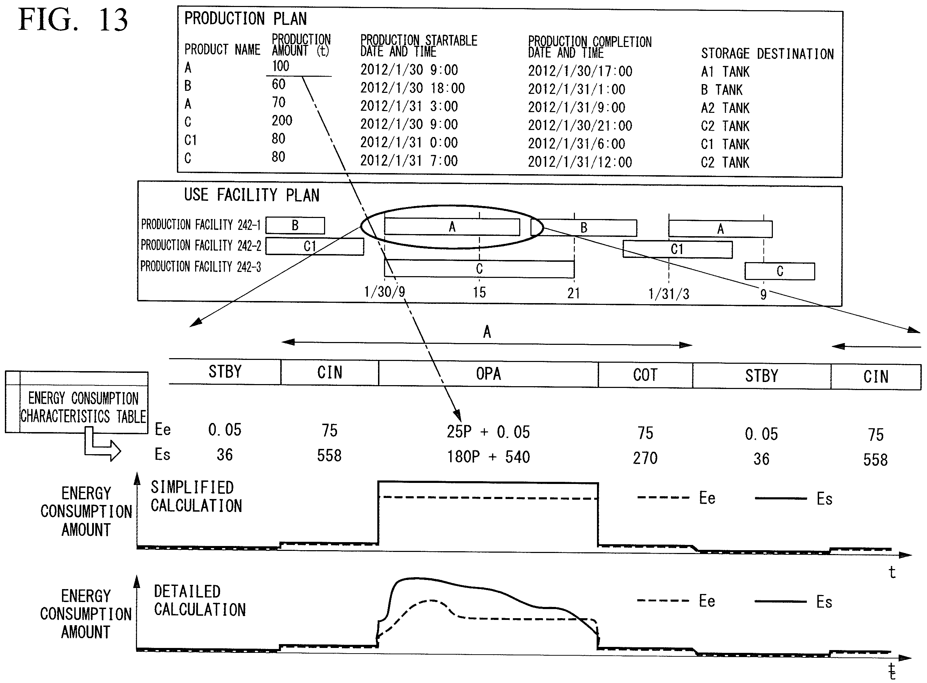

First, an example of a case in which the production energy consumption predictor 261 calculates a detailed electric power consumption amount will be described. FIG. 13 is a diagram illustrating an example of an energy consumption amount calculation method of the industrial demand response enabling system according to the present embodiment. An example of a current production plan and a use facility plan in this current production plan is illustrated in the top section of FIG. 13. In FIG. 13, respective processes in the period from 9:00 to 17:00 of January 30, in which the production facility 242-1 is operated to manufacture the product A according to the use facility plan are illustrated in the middle part, and an example of a graph of the energy consumption amount at respective time points of this period is illustrated at the bottom section.

As illustrated in the middle part of FIG. 13, when the production facility 242-1 manufactures the product A, the process starts from a loading process (Carry in: CIN) after a preparation process (Stand by: STBY), proceeds to a product A manufacturing process (Operation A: OPA) and an unloading process (Carry out: COT), and ends to enter a preparation process (Stand by: STBY) again.

The production energy consumption predictor 261 calculates the energy consumption amounts of the respective processes in the production facility 242-1 on the basis of the energy consumption characteristics table illustrated in FIG. 4. More specifically, as illustrated in the middle part of FIG. 13, the consumption amount of electrical energy Ee in the product A manufacturing process (Operation A: OPA), for example, is calculated by inserting the production amount "P=100 (tons)" of the product A produced in this period illustrated in the current production plan illustrated in the top section of FIG. 13 to the variable P of the formula "25P + 0.05 (MWh/h)" of the consumption amount per unit time illustrated in the energy consumption characteristics table. Similarly, the consumption amount of steam energy Es in the product A manufacturing process (Operation A: OPA) is calculated by inserting the production amount "P=100 (tons)" of the product A illustrated in the current production plan to the variable P of the formula "180P + 540 (GJ/h) = 50P + 150 (MWh/h)" of the consumption amount per unit time illustrated in the energy consumption characteristics table. In this way, such a graph of a simplifiedly calculated energy consumption amount as illustrated in the upper bottom section of FIG. 13 is obtained.

However, as described above, when the respective processes are executed by being subdivided in a plurality of phases, the production energy consumption predictor 261 calculates a detailed energy consumption amount on the basis of an energy consumption characteristics table which illustrates the energy consumption amounts in the respective subdivided phases. In this way, such a graph of a detailedly calculated energy consumption amount as illustrated in the lower bottom section of FIG. 13 is obtained. The graph of the detailedly calculated energy consumption amount illustrated in the lower bottom section of FIG. 13 illustrates an example of the graph of the energy consumption amount when the product A manufacturing process (Operation A: OPA) is executed by being subdivided in the phases of a first phase (temperature rise), a second phase (hold), a third phase (annealing), and a fourth phase (finishing), for example. By the production energy consumption predictor 261 calculating the detailed energy consumption amount, the production plan amendment implementation determination system 26 can calculate the gain/loss in the production plant 20 in more detail. That is, rather than the graph of the simplifiedly calculated energy consumption amount which is calculated on the basis of the energy consumption amount represented by a constant value whereby the energy consumption amounts in the respective process periods are represented by constant values, the graph of the detailedly calculated energy consumption amount in which the energy consumption amounts are illustrated in the respective subdivided phases of the respective processes can enable the implementability of the requested demand response to be determined with a small error. This is advantageous when the reduction amount of electric power in each time period of the requested demand response is approximately equal to the consumption amount of electric power used in the requested period.

The production energy consumption predictor 261 outputs the calculated predicted value of the consumption amount of electric power to the utilization plan change gain/loss calculator 262 in the same format as the graphs of the actual value and the predicted value of the electric power consumption amount illustrated at the bottom section of FIGs. 7A and 7B, for example.

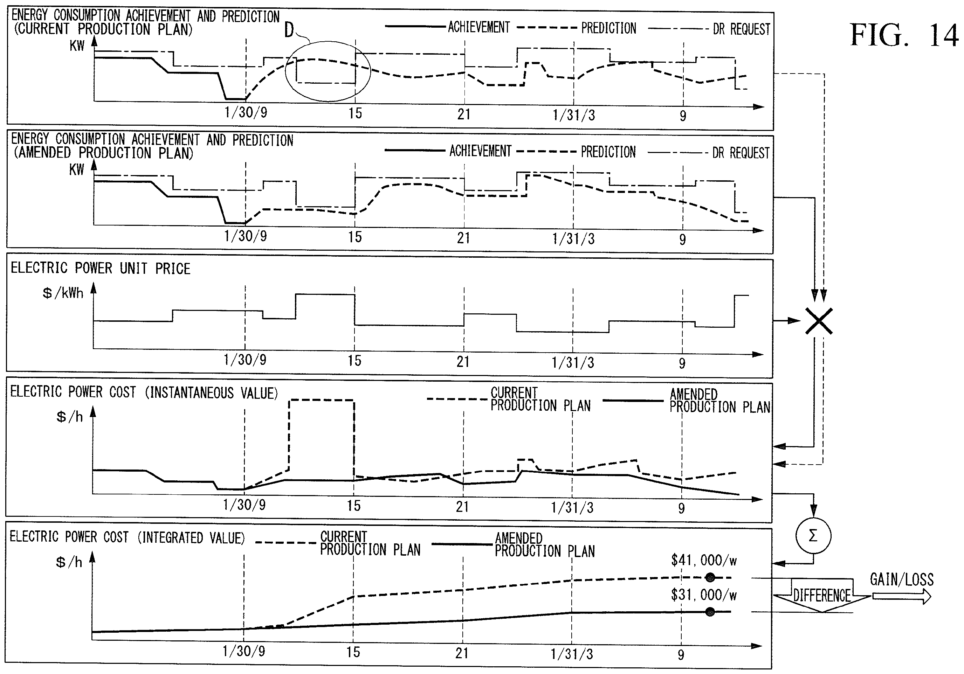

Subsequently, an example of a gain/loss calculation process of the utilization plan change gain/loss calculator 262 will be described. FIG. 14 is a diagram illustrating an example of a process of calculating a gain/loss associated with a change in the utilization plan in the industrial demand response enabling system according to the present embodiment. FIG. 14 schematically illustrates a gain/loss calculation process (hereinafter referred to as a "utilization plan gain/loss calculation process") of the utilization plan change gain/loss calculator 262. The graph illustrated at the first section of FIG. 14 is an example of a graph of an actual value and a predicted value in each time period of the electric power consumption amount calculated on the basis of the current production plan, and the graph illustrated at the second section of FIG. 14 is an example of a graph of an actual value and a predicted value in each time period of the electric power consumption amount calculated on the basis of the amended production plan. The graph illustrated at the third section of FIG. 14 is an example of a graph of unit price information in each time period of the electric power consumption amount. The graph illustrated at the fourth section of FIG. 14 is an example of a graph illustrating the cost of electric power including an incentive and a penalty of the actual value and the predicted value of the electric power consumption amount in the current production plan and the amended production plan and the graph illustrated at the fifth section of FIG. 14 is an example of a graph illustrating a cumulative cost of electric power in a predetermined period of the current production plan and the amended production plan.

The graphs of the actual value and the predicted value in each time period of the electric power consumption amount illustrated at the first and second sections of FIG. 14 illustrate the predicted values of the electric power consumption amounts of the current production plan and the amended production plan output from the production energy consumption predictor 261. FIG. 14 also illustrates a reduction amount (DR request) of electric power in each time period of the requested demand response. The graph of the unit price information in each time period of electric power illustrated at the third section of FIG. 14 illustrates the graph of the unit price information of electric power in each time period included in the data of the fee information transmitted from the sales order system 11.

Like the DR request illustrated in the graphs of the actual value and the predicted value in each time period of the electric power consumption amount illustrated at the first and second sections of FIG. 14, the reduction amount of electric power in the demand response varies from time to time. The unit price of electric power also varies with the DR request. Due to this, when the electric power consumption amount is smaller than the electric power reduction amount illustrated in the DR request, it is possible to reduce the cost of electric power to be low, and in some case, to obtain an incentive. On the other hand, when electric power is consumed exceeding the reduction amount of electric power illustrated in the DR request, a penalty is charged.

Therefore, in the utilization plan gain/loss calculation process of the utilization plan change gain/loss calculator 262, first, the costs of electric power in each time period of the respective production plans are calculated by multiplying the unit price information of electric power in each time period with the predicted values of the electric power consumption amount of the current production plan and the amended production plan. In the utilization plan gain/loss calculation process of the utilization plan change gain/loss calculator 262, the calculated costs of electric power in each time period of the respective production plans are corrected using the incentive information and the penalty information in each time period included in the data of the fee information transmitted from the sales order system 11 on the basis of the DR request. In this way, the cost (hereinafter referred to as a "electric power cost") in which the incentive and the penalty are taken into consideration can be calculated for each of the current production plan and the amended production plan. More specifically, such a graph of the electric power cost in which the incentive and the penalty are taken into consideration as illustrated at the fourth section of FIG. 14 can be obtained for each of the current production plan and the amended production plan. The electric power cost calculated herein is the cost of electric power in each time period (that is, an instantaneous value of each time period).

In the example illustrated in FIG. 14, as illustrated at the first section of FIG. 14, the period from 12:00 to 15:00 of January 30, indicated by the region D does not meet the request of the demand response. Due to this, as can be understood from the graph of the electric power cost illustrated at the fourth section of FIG. 14, the instantaneous value of the electric power cost in which the incentive and the penalty in the current production plan are taken into consideration increases in this period.

After that, in the utilization plan gain/loss calculation process of the utilization plan change gain/loss calculator 262, the electric power cost (instantaneous value) illustrated at the fourth section of FIG. 14 is integrated for a predetermined period. In this way, such a graph of electric power cost (integrated value) as illustrated at the fifth section of FIG. 14 can be obtained for each of the current production plan and the amended production plan. The graph of the electric power cost (integrated value) illustrated at the fifth section of FIG. 14 illustrates an example when the electric power cost (instantaneous value) is integrated for one week. From the graph of the electric power cost (integrated value) illustrated at the fifth section of FIG. 14, it can be understood that the electric power cost for one week is 41,000 dollars for the current production plan and is 31,000 dollars for the amended production plan. It can be understood that the production plant 20 obtain a gain of 10,000 (dollars) (=41,000 (dollars) - 31,000 (dollars)) by changing the current production plan to the amended production plan. The difference between the electric power cost (integrated value) of the current production plan and the electric power cost (integrated value) of the amended production plan in this predetermined period is a gain/loss associated with the change in the utilization plan.

Therefore, the utilization plan change gain/loss calculator 262 outputs the gain (=10,000 (dollars)) corresponding to the difference between the electric power costs (integrated values) of the current production plan and the amended production plan to the gain/loss adder 264 as a utilization plan change gain/loss.

The utilization plan change gain/loss calculator 262 may visualize the items of information calculated by the utilization plan gain/loss calculation process by displaying the same on a display means or the like provided in the production plan amendment implementation determination system 26, for example. For example, such a graph of the electric power cost (instantaneous value) as illustrated at the fourth section of FIG. 14 or such a graph of the electric power cost (integrated value) as illustrated at the fifth section of FIG. 14 may be displayed. In this case, the utilization plan change gain/loss calculator 262 may display the graph of the electric power cost (instantaneous value) or the electric power cost (integrated value) so as to be superimposed on the graphs of the actual value and the predicted value in each time period of the electric power consumption amount illustrated at the first and second sections of FIG. 14. The graph of the electric power cost (instantaneous value) or the electric power cost (integrated value) may be displayed so as to be superimposed on a graph which visualizes the change in the reducible electric power of the entire industrial demand response enabling system illustrated in FIG. 10, for example, in a time-axis direction. Furthermore, when the production plant 20 supplies the electrical energy obtained by the energy conversion facility 233 converting non-electrical energy or the electrical energy accumulated in the energy storage facility 234 to the production facility and uses the electrical energy instead of the electric power purchased from the electricity provider 40, these types of electrical energy may be displayed in a superimposed manner. In this way, an administrator of the production plant 20, for example, can visually check the electric power reducible by the entire production plant 20 and the electric power cost.

Next, an example of a gain/loss calculation method of the production plan change gain/loss calculator 263 will be described. The production plan change gain/loss calculator 263 checks whether the change in the use facility plan associated with the change from the current production plan to the amended production plan is associated with the respective predetermined limitations in the production plant 20 on the basis of the use facility plans of the current production plan and the amended production plan. The production plan change gain/loss calculator 263 determines whether the target limitations incur a cost and calculates the sum of the costs of the respective limitations which are determined to incur a cost. More specifically, the production plan change gain/loss calculator 263 checks the content of the respective limitations and selects a target limitation which is likely to incur a cost when the use facility plan of the current production plan is changed to the use facility plan of the amended production plan. After that, the production plan change gain/loss calculator 263 determines whether the selected limitations incur a cost and calculates the sum of the incurred costs.

More specifically, when the production plan change gain/loss calculator 263 calculates the gain/loss of the QCD limitation, the three factors including a quality margin of producing products included in the QCD limitation, a cost margin, and a delivery margin; a production plan management guideline; and the current production plan and the amended production plan are compared. When the production plan change gain/loss calculator 263 calculates the gain/loss of the facility limitation, the three factors including a facility operation condition included in the facility limitation (that is, a limitation that three hours of a preparatory operation is required immediately before manufacturing a certain product in a certain facility, for example); a production plan management guideline; and the current production plan and the amended production plan are compared. When the production plan change gain/loss calculator 263 calculates the gain/loss of the safety limitation, the three factors including a production plant safety condition included in the safety limitation (that is, a condition that it is necessary to stop a facility positioned at the front stage when a certain facility is stopped); a production plan management guideline; and the current production plan and the amended production plan are compared. The production plan change gain/loss calculator 263 converts the margin on the production plan management guideline to an amount of money using a predetermined table or the like to calculate the gain/loss. For example, the margin is converted to an amount of money on the basis of a predetermined formula when the margin on the delivery of a certain product is 8 hours or shorter and a predetermined a table in which a fixed value is used when the margin is 8 hours or longer to calculate the gain/loss.

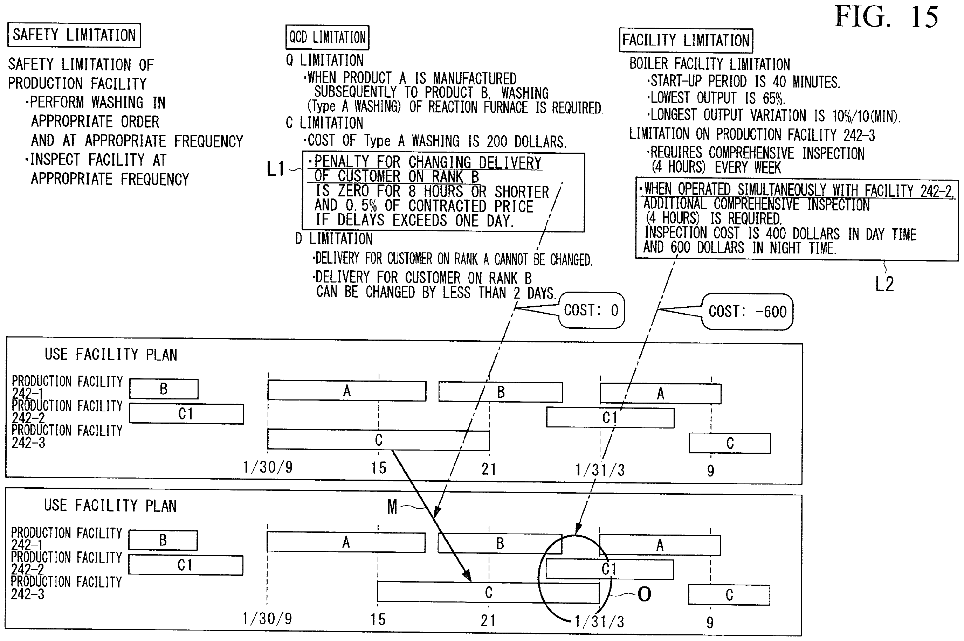

FIG. 15 is a diagram illustrating an example of a method of calculating the gain/loss associated with the change in the production plan in the industrial demand response enabling system according to the present embodiment. In FIG. 15, an example of the limitations in the production plant 20 is illustrated in the top section, and the use facility plans in the current production plan and the amended production plan are illustrated at the bottom section. More specifically, an example of the content of the respective limitations of the safety limitation, the QCD limitation, and the facility limitation in the production plant 20 is illustrated in the top section of FIG. 15, and the use facility plan in the current production plan and the use facility plan in the amended production plan are illustrated at the bottom section of FIG. 15 for comparison.

FIG. 15 illustrates a case in which the safety limitation has no limitation which may incur a cost due to the difference between the use facility plan of the current production plan and the use facility plan of the amended production plan, and one limitation which may incur a cost is selected from each of the QCD limitation and the facility limitation. More specifically, FIG. 15 illustrates a case in which as indicated by the time shift M illustrated in the use facility plan at the bottom section of FIG. 15, it is determined that, when the operating time period of the production facility 242-3 is shifted (delayed), the wording "Penalty for changing delivery for customer on rank B" in the second limitation L1 on the cost of the QCD limitation is a target limitation which may incur a cost, and the limitation L1 is selected. Moreover, FIG. 15 illustrates a case in which, since a time period in which both production facilities 242-2 and 242-3 are operating is present in the region D illustrated in the use facility plan at the bottom section of FIG. 15, it is determined that the wording "When operated simultaneously with facility 242-2" in the second limitation L2 on the production facility 242-3 of the facility limitation is a target limitation which may incur a cost, and the limitation L2 is selected.

In FIG. 15, it is determined whether the selected limitation incurs a cost and the sum of the costs of the limitations which are determined to incur a cost is calculated. More specifically, the selected limitation L1 in FIG. 15 indicates that "Penalty for changing delivery for customer on rank B is zero for 8 hours or shorter and 0.5% of the contracted price if the delay exceeds one day. However, since the period by which the operating time period of the production facility 242-3 is shifted (delayed) by changing the current production plan to the amended production plan is 6 hours, it is determined that the limitation L1 does not incur any cost (that is, the cost incurred by the limitation L1 is 0 (dollars)). The selected limitation L2 in FIG. 15 indicates that "Comprehensive inspection (4 hours) is additionally required when operated simultaneously with a facility 242-2. Inspection cost is 400 dollars in day time and 600 dollars in night time". Therefore, it is determined that the comprehensive inspection (4 hours) is required and 600 (dollars) is the cost incurred by the limitation L2 when the comprehensive inspection is executed in night time (that is, later than 3:00 AM of January 31). Since the cost (=600 (dollars)) incurred by the limitation L2 is a cost for performing the comprehensive inspection necessary when the production plan is changed, the cost is a loss of the production plant 20. Therefore, the gain/loss of the production plant 20 is "-600 (dollars)".

In this way, the production plan change gain/loss calculator 263 outputs a cost (loss) (= -600 (dollars)) which is addition of the cost (loss) (=0 (dollar)) incurred by the limitation L1 and the cost (loss) (=-600 (dollars)) incurred by the limitation L2 to the gain/loss adder 264 as the production plan change gain/loss.

Therefore, the gain/loss adder 264 outputs a plan change gain/loss (=9,400 (dollars)) which is an addition of the utilization plan change gain/loss (=10,000 (dollars)) output from the utilization plan change gain/loss calculator 262 and the production plan change gain/loss (=-600 (dollars)) output from the production plan change gain/loss calculator 263 to the risk subtractor 266.

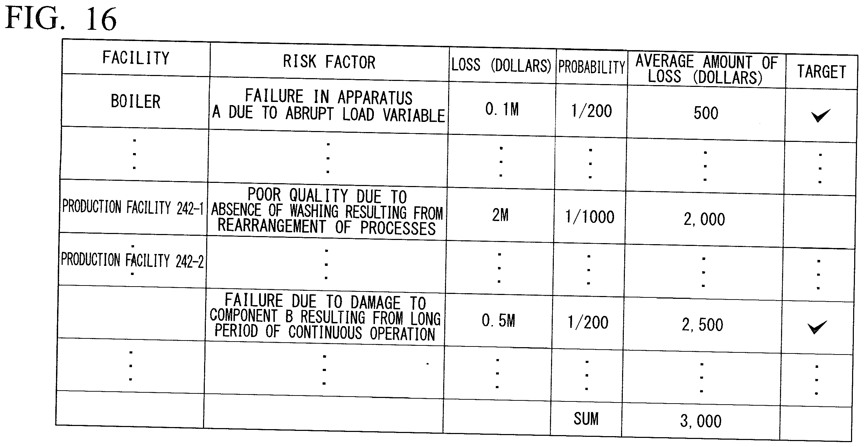

Next, an example of a gain/loss calculation method of the risk consideration gain/loss corrector 265 will be described. Items of information on the risks to the respective items of QCD, safety, and environment in the production plant 20 are listed in advance in the risk list table. FIG. 16 is a diagram illustrating an example of a risk list table in an industrial installation which is operated using the industrial demand response enabling system according to the present embodiment.

In the risk list table illustrated in FIG. 16, the names of the respective facilities installed in the production plant 20 are shown in the field "Facility". In the risk list table, the factors of risks to respective facilities such as damage to components associated with operations of respective facilities installed in the production plant 20 or quality failures of components due to aging of facility are shown in the field "Risk factor". An amount of loss (dollars) when a risk factor occurs is shown in the field "Loss" of the risk list table, and a probability of occurrence of a risk factor is shown in the field "Probability". An average amount of loss (dollars) obtained by multiplying the amount of loss (dollars) shown in the field "Loss" and the probability shown in the field "Probability" is shown in the field "Average amount of loss" of the risk list table. A "Check" mark indicating that the facility is selected by the risk consideration gain/loss corrector 265 is shown in the field "Target" of the risk list table.

The risk consideration gain/loss corrector 265 checks the respective risk factors illustrated in the risk list table and selects a target risk which is likely to occur when the current production plan is changed to the amended production plan. After that, the risk consideration gain/loss corrector 265 calculates a loss when the selected risk occurs by summing the amounts of loss shown in the field "Average amount of loss".

The risk list table illustrated in FIG. 16 illustrates a case in which "Failure in apparatus A due to abrupt load variation" which is a risk factor of a boiler and "Failure due to damage to component B resulting from long period of continuous operation" which is a risk factor of the production facility 242-2 are selected as target risks which are likely to occur when the current production plan is changed to the amended production plan. FIG. 16 illustrates a case in which the amount of loss (500 (dollars) + 2,500 (dollars) = 3,000 (dollars)) which is the sum of average amounts of loss corresponding to the risk factors selected by the risk consideration gain/loss corrector 265 is illustrated in the filed "Sum" as an amount of loss when a risk occurs due to the change from the current production plan to the amended production plan.

In this way, the risk consideration gain/loss corrector 265 outputs an amount of loss (=3,000 (dollars)) shown in the field "Sum" of the risk list table to the risk subtractor 266 as the risk consideration gain/loss.

Therefore, the risk subtractor 266 outputs a demand response gain/loss (=6,400 (dollars)) obtained by subtracting the risk consideration gain/loss (=3,000 (dollars)) output from the risk consideration gain/loss corrector 265 from the plan change gain/loss (=9,400 (dollars)) output from the gain/loss adder 264 to the comparator 267.

In this way, the comparator 267 outputs information indicating a comparison result between a predetermined demand response determination threshold and the demand response gain/loss (=6,400 (dollars)) output from the risk subtractor 266 to the plan changeability determiner 268. The plan changeability determiner 268 determines whether or not to change the current production plan to the amended production plan on the basis of the comparison result input from the comparator 267. For example, it is determined that the current production plan is to be changed to the amended production plan when the comparison result output from the comparator 267 is plus, and it is determined that the current production plan is not to be changed to the amended production plan when the comparison result output from the comparator 267 is minus (see step S490 in FIG. 12).

The production plan amendment implementation determination system 26 may not include the risk consideration gain/loss corrector 265 and the risk subtractor 266. That is, the production plan amendment implementation determination system 26 may not correct the plan change gain/loss using the risk consideration gain/loss. In this case, the plan change gain/loss output from the gain/loss adder 264 is directly input to the comparator 267, and the comparator 267 outputs information indicating the comparison result between a predetermined demand response determination threshold and the plan change gain/loss (=9,400 (dollars)) output from the gain/loss adder 264 to the plan changeability determiner 268.

As described above, according to the embodiment of the present invention, when there is a request of the industrial demand response (iDR) from the electricity provider, first, the demand response determination system that forms the industrial demand response enabling system determines whether the demand response can be enabled just by changing the operating states of the respective facilities in the production plant. In this way, in the embodiment of the present invention, it is possible to determine whether it is possible to respond to the demand response with a smaller risk than changing the production plan by rearranging the processes which may affect the entire production plan.

According to the embodiment of the present invention, when it is determined that it is not possible to enable the demand response just by changing the operating states of the respective facilities in the production plant, the demand response determination system that forms the industrial demand response enabling system issues an instruction to draft a new production plan to rearrange the processes when producing products or the types of products to be produced. In the embodiment of the present invention, the production plan amendment implementation determination system that forms the industrial demand response enabling system calculates a probability of a production plant obtained when the current production plan is changed to the newly drafted production plan and determines whether the requested demand response can be enabled by the new production plan (that is, whether the request of the demand response requested from the electricity provider is to be accepted). In this way, in the present invention, even if the current production plan is changed to the new production plan by rearranging the processes when producing products or the types of products to be produced in order to respond to the requested demand response, the production plan can be changed to an amended production plan which causes a small risk to the quality and the delivery of products to be produced in the production plant (that is, which causes a small risk (small loss) to the profit of the production plant).

According to the embodiment of the present invention, it is possible to realize reduction of electric power corresponding to the reduction amount requested from the electricity provider according to the industrial demand response (iDR) in a state in which the risks to the safety or the environment in the production plant is avoided while securing QCD of products or intermediate products produced in the production plant (company).

In the embodiment of the present invention, a case in which the production plan drafting system 21 drafts the amended production plan according to a production plan change instruction output from the demand response determination system 25 has been described. In this case, the production plan drafting system 21 does not refer to the information calculated by the industrial demand response enabling system. However, when the production plan drafting system 21 drafts the amended production plan, it is considered that the respective items of information calculated by the production plan amendment implementation determination system 26 are effectively helpful for drafting the amended production plan. For example, the predicted value of the electric power consumption amount in the current production plan calculated by the production energy consumption predictor 261 provided in the production plan amendment implementation determination system 26, the electric power cost in the current production plan calculated by the utilization plan change gain/loss calculator 262 are considered to be effectively helpful for drafting the amended production plan in which the cost for producing products is taken into consideration. This is because, although the production plan drafting system 21 originally needs to draft a production plan by taking the QCD, the safety, and the environment in the production plant 20 into consideration, when there is a request of the demand response, it is necessary to meet the reduction of electrical energy in the requested demand response. Due to this, when the industrial demand response enabling system issues an instruction to draft the amended production plan, information effective for drafting the amended production plan such as the predicted value of the electric power consumption amount in the current production plan and the electric power cost may be output to the production plan drafting system 21. In this way, the production plan drafting system 21 can draft the amended production plan so as to change the product name of products to be produced or stop the production of products (that is, to stop the operation of the production facility) and to reduce the energy consumption further greatly by changing the current production plan to the drafted amended production plan. In contrast, the production plan drafting system 21 may draft such an amended production plan that secures the gain of the production plant 20 by increasing the production amount of products using the low-cost electrical energy supplied from the electricity provider 40 in an execution time period of the demand response.

In the embodiment of the present invention, a case in which the production plan drafting system 21 drafts one amended production plan according to one production plan change instruction output from the demand response determination system 25 has been described. Due to this, a case in which the production plan amendment implementation determination system 26 determines the implementability of one amended production plan output from the production plan drafting system 21 has been described. However, the number of amended production plans drafted by the production plan drafting system 21 according to one production plan change instruction is not limited to the number described in the embodiment of the present invention, and the production plan drafting system 21 may draft a plurality of amended production plans simultaneously. Therefore, the production plan amendment implementation determination system 26 may determine the implementability of the plurality of amended production plans output from the production plan drafting system 21. The same ideal is applied to when the production plan amendment implementation determination system 26 determines the implementability of a plurality of amended production plans.

For example, a program for realizing the processes of the industrial demand response enabling system illustrated in FIG. 1 or the constituent elements of the demand response determination system 25 or the production plan amendment implementation determination system 26 that forms the industrial demand response enabling system may be recorded on a computer-readable recording medium, and a computer system may read and execute the program recorded on the recording medium so that various processes of the industrial demand response enabling system of the present embodiment or the demand response determination system 25 or the production plan amendment implementation determination system 26 that forms the industrial demand response enabling system are performed. The "computer system" mentioned herein may include an OS or hardware such as peripheral apparatuses. The "computer system" includes a homepage providing environment (or a display environment) when the WWW system is used. The "computer-readable recording medium" means a storage device such as a writable nonvolatile memory such as a flexible disk, an optomagnetic disc, a ROM, and a flash memory, a portable medium such as a CD-ROM, and a hard disk included in a computer system.

Furthermore, the "computer-readable recording medium" may also include a medium which maintains a program for a certain period like a volatile memory (for example, a dynamic random access memory (DRAM)) in a computer system which serves as a server or a client when a program is transmitted via a network such as the Internet or a communication circuit such as a telephone line. The program may be transmitted from a computer system that stores this program in a storage device or the like to another computer system via a transmission medium or via transmission waves in the transmission medium. Here, the "transmission medium" that transmits the program means a medium having the function of transmitting information like a network (communication network) such as the Internet or a communication circuit (communication line) such as a telephone line. The program may realize a portion of the above-described functions. Furthermore, the program may be one (a so-called difference file (a difference program)) which realizes the above-described functions in combination with a program which is already recorded in a computer system.

While the embodiment of the present invention has been described with reference to the drawings, the specific configuration is not limited to this embodiment, and the present invention also include various changes made without departing from the spirit of the present invention.

### Reference Signs List

1 Company
10 Head office
11 Sales order system
20 Production plant (industrial installation)
21 Production plan drafting system
22 Production executing system
23 Energy section
231 Energy control system
232 Power receiving and distribution facility
233 Energy conversion facility
234 Energy storage facility
24 Production section (industrial installation)
241 Production facility control system
242-1,242-2 Production facility (facility, process rearrangement responding facility, third facility)
242-3 Production facility (facility, time-shiftable facility, second facility)
243-1 Lighting facility (facility)
243-2 Lighting facility (facility, always responding facility, first facility)
244-1 Air-conditioning facility (facility)
244-2 Air-conditioning facility (facility, always responding facility, first facility)
245-2 C1 tank (facility)
245-3 C2 tank (facility)
25 Demand response determination system (demand response determiner, first determination device)
26 Production plan amendment implementation determination system (production plan amendment implementation determiner, second determination device)
261 Production energy consumption predictor (production plan amendment implementation determiner, second determination device, production energy consumption predictor)
262 Utilization plan change gain/loss calculator (production plan amendment implementation determiner, second determination device, utilization plan change gain/loss calculator, first gain/loss calculator)
263 Production plan change gain/loss calculator (production plan amendment implementation determiner, second determination device, production plan change gain/loss calculator, second gain/loss calculator)
264 Gain/loss adder (production plan amendment implementation determiner, second determination device)
265 Risk consideration gain/loss corrector (production plan amendment implementation determiner, second determination device, risk consideration gain/loss corrector, gain/loss corrector)
266 Risk subtractor (production plan amendment implementation determiner, second determination device, risk consideration gain/loss corrector, gain/loss corrector) 267 Comparator (production plan amendment implementation determiner, second determination device)
268 Plan changeability determiner (production plan amendment implementation determiner, second determination device)
SW1 Changeover switch (production plan amendment implementation determiner, second determination device)
SW2 Instruction switch (production plan amendment implementation determiner, second determination device)
30 Customer
40 Electricity provider
41 Demand response transaction server (electricity provider)

## Claims

1. An industrial demand response enabling system comprising:
a first determination device configured to specify a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility and calculate a first reducible amount of the electric power reducible by the first facility and a second reducible amount of the electric power reducible by the second facility, wherein
the first determination device determines, on the basis of the first and second reducible amounts, whether it is possible to reduce the electric power corresponding to a reduction amount designated by a reduction request from an electricity provider and issues an instruction to change an operating state of at least one of the first and second facilities which are necessary for meeting the designated reduction amount when the first determination device determines that it is possible to reduce the electric power corresponding to the designated reduction amount.

2. The industrial demand response enabling system according to claim 1, wherein
the first determination device outputs information indicating a determination result of whether it is possible to reduce the electric power corresponding to the reduction amount designated by the reduction request from the electricity provider.

3. The industrial demand response enabling system according to claim 1 or 2, wherein
the first determination device specifies the second facility and a third facility capable of reducing the electric power used by the facility by rearranging processes among the respective facilities on the basis of a production plan for operating the respective facilities installed in the industrial installation to produce products and a utilization plan of the respective facilities based on the production plan and periodically updates a demand response capacity list table in which the first reducible amount, the second reducible amount, and a third reducible amount of the electric power reducible by the third facility are summarized.

4. The industrial demand response enabling system according to claim 3, wherein
the first determination device determines whether the first reducible amount meets the designated reduction amount and issues an instruction to change the operating state of the first facility when the first reducible amount meets the reduction amount, and
the first determination device determines whether a reducible amount obtained by summing the first reducible amount and the second reducible amount meets the reduction amount when the first reducible amount does not meet the reduction amount and issues an instruction to change the operating state of the first and second facilities when the reducible amount obtained by summing the first reducible amount and the second reducible amount meets the reduction amount.

5. The industrial demand response enabling system according to claim 4, wherein
the first determination device determines whether a reducible amount obtained by adding the first reducible amount and the third reducible amount meets the reduction amount when the reducible amount obtained by summing the first reducible amount and the second reducible amount does not meet the reduction amount, issues an instruction to draft a new production plan when the reducible amount obtained by adding the first reducible amount and the third reducible amount meets the reduction amount, and issues an instruction to change the current production plan to the new production plan when the new production plan drafted according to the instruction to draft the new production plan is an implementable production plan.

6. The industrial demand response enabling system according to any one of claims 3 to 5, wherein
the first determination device determines whether the second facility can reduce the electric power at a designated time at which reduction of the electric power corresponding to the designated reduction amount starts when the designated time is later than a feasible time at which the first facility and the second facility can start reducing the electric power and is earlier than a production plan drafting time at which a new production plan is required to be drafted and issues an instruction to change the operating state of the first facility when the second facility cannot reduce the electric power, and
the determination device issues an instruction to change the operating states of the first and second facilities when the second facility can reduce the electric power.

7. The industrial demand response enabling system according to claim 6, wherein
the first determination device issues an instruction to draft the new production plan when the designated time is later than the production plan drafting time required for drafting the new production plan and issues an instruction to change the current production plan to the new production plan when the new production plan drafted according to the instruction to draft the new production plan is an implementable production plan.

8. The industrial demand response enabling system according to any one of claims 4 to 7, wherein
when changing the operating state of the second facility is instructed, the first determination device excludes the second facility from being a target for which changing the operating state is instructed to prevent an instruct of a further change in the operating state of the second facility.

9. The industrial demand response enabling system according to any one of claims 1 to 8, wherein
the first determination device displays information on the first reducible amount and information on the second reducible amount to be visualized in a time-axis direction.

10. The industrial demand response enabling system according to any one of claims 1 to 9, further comprising:
a second determination device configured to calculate a gain/loss obtained by changing the production plan for operating the respective facilities installed in the industrial installation to produce products to an amended production plan which is a new production plan and determine whether the production plan is to be changed to the amended production plan, wherein
the first determination device determines that the electric power corresponding to the designated reduction amount can be reduced when the second determination device determines that the production plan is to be changed.

11. The industrial demand response enabling system according to claim 10, wherein
the second determination device comprises:
a production energy consumption predictor configured to predict a consumption amount of the electric power used by the respective facilities operated in the production plan on the basis of an energy consumption characteristics table in which a plurality of processes used when the respective facilities installed in the industrial installation produce products, a time period required for each of the plurality of processes, a process to be performed subsequently to each process, and a consumption amount of energy consumed by each of the plurality of processes are summarized for each of the processes and output the predicted consumption amount of the electric power, and
the production energy consumption predictor outputs the consumption amount of the electric power with respect to each of the current production plan and the amended production plan.

12. The industrial demand response enabling system according to claim 11, wherein
the second determination device further comprises:
a first gain/loss calculator configured to calculate, as a first gain/loss, a gain/loss obtained when the current production plan is changed to the amended production plan on the basis of the consumption amounts of the electric power of the current production plan and the amended production plan, information on a unit price in each time period of the electric power included in the reduction request, information on an incentive when the electric power is reduced according to the reduction request, and information on a penalty fee awarded when the electric power according to the reduction request cannot be reduced; and
a second gain/loss calculator configured to calculate, as a second gain/loss, a gain/loss obtained when the current production plan is changed to the amended production plan on the basis of the current production plan, the amended production plan, and limitations of the industrial installation.

13. The industrial demand response enabling system according to claim 12, wherein
the second determination device determines that the amended production plan can be implemented when a third gain/loss obtained by adding the first and second gains/losses exceeds a predetermined threshold for determining whether the third gain/loss corresponds to a demand response, and
when the third gain/loss is equal to or smaller than the predetermined threshold, the second determination device determines that the amended production plan cannot be implemented and outputs information on a determination result.

14. The industrial demand response enabling system according to claim 13, wherein
the second determination device further comprises:
a gain/loss corrector configured to specify a risk occurring when the current production plan is changed to the amended production plan on the basis of a risk list table in which items of information on a risk occurring when operations of the respective facilities installed in the industrial installation are changed are listed and output a fourth gain/loss obtained by correcting the third gain/loss using a gain/loss generated due to the specified risk, wherein
the second determination device determines that the amended production plan can be implemented when the fourth gain/loss exceeds the threshold and determines that the amended production plan cannot be implemented when the fourth gain/loss is equal to or smaller than the threshold.

15. The industrial demand response enabling system according to any one of claims 10 to 14, wherein
the second determination device displays information on the calculated gain/loss in a visualized manner, and
the second determination device determines that the amended production plan can be implemented when an instruction to implement the amended production plan is input.

16. An industrial demand response enabling method comprising:
specifying a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility;
calculating a first reducible amount of the electric power reducible by the first facility and a second reducible amount of the electric power reducible by the second facility;
determining, on the basis of the first and second reducible amounts, whether it is possible to reduce the electric power corresponding to a reduction amount designated by a reduction request from an electricity provider; and
issuing an instruction to change an operating state of at least one of the first and second facilities which are necessary for meeting the designated reduction amount when it is determined that it is possible to reduce the electric power corresponding to the designated reduction amount.

17. The industrial demand response enabling method according to claim 16, further comprising:
outputting a determination result on whether it is possible to reduce the electric power corresponding to the reduction amount designated by the reduction request from the electricity provider.

18. The industrial demand response enabling method according to claim 16 or 17, further comprising:
calculating a gain/loss obtained by changing a production plan for operating the respective facilities installed in the industrial installation to produce products and determining whether the production plan is to be changed; and
determining that the electric power corresponding to the designated reduction amount can be reduced when the second determination device determines that the production plan is to be changed.

19. A non-transitory computer-readable storage medium storing a program to be executed by a computer, the program comprising:
a code for specifying a first facility and a second facility among facilities installed in an industrial installation, the first facility being capable of addressing reduction of electric power used by the facility by partially stopping the facility or reducing capacity, and the second facility being capable of addressing reduction of electric power used by the facility by changing an operating time period of the facility;
a code for calculating a first reducible amount of the electric power reducible by the first facility and a second reducible amount of the electric power reducible by the second facility;
a code for determining, on the basis of the first and second reducible amounts, whether it is possible to reduce the electric power corresponding to a reduction amount designated by a reduction request from an electricity provider; and
a code for issuing an instruction to change an operating state of at least one of the first and second facilities which are necessary for meeting the designated reduction amount when it is determined that it is possible to reduce the electric power corresponding to the designated reduction amount.

20. The non-transitory computer-readable storage medium according to claim 19, wherein
the program further comprises:
a code for outputting information indicating a determination result on whether it is possible to reduce the electric power corresponding to the reduction amount designated by the reduction request from the electricity provider.

21. The non-transitory computer-readable storage medium according to claim 19 or 20, wherein
the program further comprises:
a code for calculating a gain/loss obtained by changing a production plan for operating the respective facilities installed in the industrial installation to produce products and determining whether the production plan is to be changed; and
a code for determining that the electric power corresponding to the designated reduction amount can be reduced when the second determination device determines that the production plan is to be changed.
